(19) Europäisches Patentamt
European Patent Office
Office européen des brevets

(11) EP 3 772 129 B1

(12) **EUROPÄISCHE PATENTSCHRIFT**

(45) Veröffentlichungstag und Bekanntmachung des Hinweises auf die Patenterteilung:
**30.06.2021 Patentblatt 2021/26**

(21) Anmeldenummer: **19189435.1**

(22) Anmeldetag: **31.07.2019**

(51) Int Cl.:
***H01M 10/0563** (2010.01)* ***H01M 10/0568** (2010.01)*
***H01M 10/0525** (2010.01)* *H01M 4/505 (2010.01)*
*H01M 4/525 (2010.01)* *H01M 4/58 (2010.01)*
*H01M 4/587 (2010.01)* *H01M 4/62 (2006.01)*
*H01M 4/74 (2006.01)* *H01M 4/80 (2006.01)*
*H01M 10/054 (2010.01)* *H01M 10/0567 (2010.01)*

(54) **AUF SO2-BASIERENDER ELEKTROLYT FÜR EINE WIEDERAUFLADBARE BATTERIEZELLE UND WIEDERAUFLADBARE BATTERIEZELLE DENSELBEN UMFASSEND**

SO2-BASED ELECTROLYTE FOR RECHARGEABLE BATTERY CELL AND RECHARGEABLE BATTERY CELL COMPRISING THE SAME

ÉLECTROLYTE À BASE DE SO2 POUR UN ÉLÉMENT DE BATTERIE RECHARGEABLE ET ÉLÉMENT DE BATTERIE RECHARGEABLE LE COMPRENANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.02.2021 Patentblatt 2021/05**

(73) Patentinhaber: **Innolith Technology AG**
**4052 Basel (CH)**

(72) Erfinder:
- **Zinck, Laurent**
  **67470 Mothern (FR)**
- **Pszolla, Christian**
  **76185 Karlsruhe (DE)**
- **Busch, Rebecca**
  **76646 Bruchsal (DE)**

(74) Vertreter: **Lemcke, Brommer & Partner**
**Patentanwälte Partnerschaft mbB**
**Siegfried-Kühn-Straße 4**
**76135 Karlsruhe (DE)**

(56) Entgegenhaltungen:
**WO-A1-2017/178543** **JP-A- 2001 143 750**
**JP-B2- 4 306 858** **US-A- 4 891 281**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft einen auf $SO_2$-basierenden Elektrolyt für eine wiederaufladbare Batteriezelle und eine wiederaufladbare Batteriezelle.

Wiederaufladbare Batteriezellen sind auf vielen technischen Gebieten von großer Bedeutung. Vielfach werden sie für Anwendungen eingesetzt, bei denen nur kleine wiederaufladbare Batteriezellen mit relativ geringen Stromstärken benötigt werden, wie beispielsweise beim Betrieb von Mobiltelefonen. Daneben gibt es aber auch einen großen Bedarf an größeren wiederaufladbaren Batteriezellen für Hochenergieanwendungen, wobei eine Massenspeicherung von Energie in Form von Batteriezellen für den elektrischen Antrieb von Fahrzeugen von besonderer Bedeutung ist.

Eine wichtige Anforderung bei derartigen wiederaufladbaren Batteriezellen ist eine hohe Energiedichte. Das bedeutet, dass die wiederaufladbare Batteriezelle möglichst viel elektrische Energie je Gewichts- und Volumeneinheit enthalten soll. Hierfür hat sich Lithium als aktives Metall als besonders vorteilhaft erwiesen. Als aktives Metall einer wiederaufladbaren Batteriezelle bezeichnet man das Metall, dessen Ionen innerhalb des Elektrolyten beim Laden oder Entladen der Zelle zur negativen oder positiven Elektrode wandern und dort an elektrochemischen Prozessen teilnehmen. Diese elektrochemischen Prozesse führen direkt oder indirekt zur Abgabe von Elektronen in den externen Stromkreis oder zur Aufnahme von Elektronen aus dem externen Stromkreis. Wiederaufladbare Batteriezellen, welche Lithium als aktives Metall enthalten, werden auch als Lithium-Ionen-Zellen bezeichnet. Die Energiedichte dieser Lithium-Ionen-Zellen kann entweder durch Steigerung der spezifischen Kapazität der Elektroden oder durch Steigerung der Zellspannung erhöht werden.

Sowohl die positive als auch die negative Elektrode von Lithium-Ionen-Zellen sind als Insertionselektroden ausgebildet. Unter dem Begriff "Insertionselektrode" im Sinne der vorliegenden Erfindung werden Elektroden verstanden, welche eine Kristallstruktur besitzen, in die Ionen des aktiven Materials beim Betrieb der Lithium-Ionen-Zelle ein- und ausgelagert werden können. Das bedeutet, dass sich die Elektrodenprozesse nicht nur an der Oberfläche der Elektroden, sondern auch innerhalb der Kristallstruktur abspielen können. Die negative Elektrode von Lithium-Ionen-Zellen besteht aus einer Kohlenstoffbeschichtung, welche auf ein Ableitelement aus Kupfer aufgetragen ist. Das Ableitelement stellt den erforderlichen elektronisch leitenden Anschluss zwischen der Kohlenstoffbeschichtung und dem externen Stromkreis her. Die positive Elektrode besteht aus Lithiumkobaltoxid ($LiCoO_2$), welches auf ein Ableitelement aus Aluminium aufgetragen ist. Beide Elektroden weisen eine Dicke von in der Regel weniger als 100 $\mu$m auf und sind daher sehr dünn ausgebildet. Beim Laden der Lithium-Ionen-Zelle werden die Ionen des aktiven Metalls aus der positiven Elektrode ausgelagert und in die negative Elektrode eingelagert. Beim Entladen der Lithium-Ionen-Zelle läuft der umgekehrte Prozess ab.

Der Elektrolyt ist ein wichtiges Funktionselement jeder wiederaufladbaren Batteriezelle. Er enthält meistens ein Lösungsmittel oder Lösungsmittelgemisch und mindestens ein Leitsalz. Feststoffelektrolyte oder ionische Flüssigkeiten enthalten zum Beispiel kein Lösungsmittel, sondern nur ein Leitsalz. Der Elektrolyt steht mit der positiven und der negativen Elektrode der Batteriezelle in Kontakt. Mindestens ein Ion des Leitsalzes (Anion oder Kation) ist in dem Elektrolyten derartig beweglich, dass durch Ionenleitung ein für die Funktion der wiederaufladbaren Batteriezelle erforderlicher Ladungstransport zwischen den Elektroden stattfinden kann. Der Elektrolyt wird ab einer bestimmten oberen Zellspannung der wiederaufladbaren Batteriezelle oxidativ elektrochemisch zersetzt. Dieser Vorgang führt oft zu einer irreversiblen Zerstörung von Bestandteilen des Elektrolyten und damit zu einem Ausfall der wiederaufladbaren Batteriezelle. Auch reduktive Prozesse können den Elektrolyten ab einer bestimmten unteren Zellspannung zersetzen. Um diese Prozesse zu vermeiden, werden die positive und die negative Elektrode derart gewählt, dass die Zellspannung unter- bzw. oberhalb der Zersetzungsspannung des Elektrolyten liegt. Der Elektrolyt bestimmt somit das Spannungsfenster (in Engl.: voltage window), in dessen Bereich eine wiederaufladbare Batteriezelle reversibel betrieben werden kann.

Die aus dem Stand der Technik bekannten Lithium-Ionen-Zellen enthalten einen Elektrolyten, der aus einem in einem organischen Lösungsmittel oder Lösungsmittelgemisch und einem darin gelösten Leitsalz besteht. Bei dem Leitsalz handelt es sich um ein Lithiumsalz wie beispielsweise Lithiumhexafluorophosphat ($LiPF_6$). Das Lösungsmittelgemisch kann beispielsweise Ethylencarbonat enthalten. Aufgrund des organischen Lösungsmittels oder Lösungsmittelgemischs werden derartige Lithium-Ionen-Zellen auch als organische Lithium-Ionen-Zellen bezeichnet.

Neben dem im Stand der Technik häufig verwendeten Lithiumhexafluorophosphat ($LiPF_6$) als Leitsalz werden auch andere Leitsalze für organische Lithium-Ionen-Zellen beschrieben. So beschreibt zum Beispiel das Dokument JP 4 306858 B2 Leitsalze in Form von Tetraalkoxy- oder Tetraaryloxyboratsalzen, die fluoriert oder teilfluoriert sein können. Die JP 2001 143750 A berichtet von fluorierten oder teilfluorierten Tetraalkoxyboratsalzen und Tetraalkoxyaluminatsalzen als Leitsalze. In JP 4 306858 B2 und JP 2001 143750 A werden die beschriebenen Leitsalze in organischen Lösungsmitteln oder Lösungsmittelgemischen gelöst und in organischen Lithium-Ionen-Zellen eingesetzt.

Es ist seit langem bekannt, dass das ungewollte Überladen von organischen Lithium-Ionen-Zellen zu einer irreversiblen Zersetzung von Elektrolytkomponenten führt. Dabei findet die oxidative Zersetzung des organischen Lösungsmittels und/oder des Leitsalzes an der Oberfläche der positiven Elektrode statt. Die während dieser Zersetzung

gebildete Reaktionswärme und die dabei entstehenden gasförmigen Produkte sind für den darauffolgenden, sogenannten "Thermal Runaway" (englisch für "thermisches Durchgehen") und die dadurch resultierende Zerstörung der organischen Lithium-Ionen-Zelle verantwortlich. Die überwiegende Mehrheit an Ladeprotokollen für diese organischen Lithium-Ionen-Zellen zieht die Zellenspannung als Indikator für das Ladeende heran. Hierbei sind Unfälle durch einen Thermal Runaway besonders wahrscheinlich bei der Verwendung von Multizellen-Batteriepacks, in denen mehrere organische Lithium-Ionen-Zellen mit nicht übereinstimmenden Kapazitäten in Reihe geschaltet werden.

Deshalb sind organische Lithium-Ionen-Zellen problematisch hinsichtlich ihrer Stabilität sowie langfristigen Betriebssicherheit. Sicherheitsrisiken werden insbesondere auch durch die Brennbarkeit des organischen Lösungsmittels oder Lösungsmittelgemischs verursacht. Wenn eine organische Lithium-Ionen-Zelle Feuer fängt oder sogar explodiert, bildet das organische Lösungsmittel des Elektrolyten ein brennbares Material. Um solche Sicherheitsrisiken zu vermeiden, müssen zusätzliche Maßnahmen getroffen werden. Zu diesen Maßnahmen zählen insbesondere eine sehr exakte Regelung der Lade- und Entladevorgänge der organischen Lithium-Ionen-Zelle sowie eine optimierte Batteriekonstruktion. Weiterhin enthält die organische Lithium-Ionen-Zelle Komponenten, die bei ungewollter Temperaturerhöhung schmelzen und hierbei die organische Lithium-Ionen-Zelle mit geschmolzenem Kunststoff fluten können. Dadurch wird eine weitere unkontrollierte Temperaturerhöhung vermieden. Diese Maßnahmen führen jedoch zu erhöhten Produktionskosten bei der Herstellung der organischen Lithium-Ionen-Zelle sowie zu einem erhöhten Volumen und Gewicht. Weiterhin vermindern diese Maßnahmen die Energiedichte der organischen Lithium-Ionen-Zelle.

Ein weiterer Nachteil von organischen Lithium-Ionen-Zellen besteht darin, dass etwaige in Anwesenheit von Restmengen an Wasser entstehende Hydrolyseprodukte gegenüber den Zellkomponenten der wiederaufladbaren Batteriezelle sehr aggressiv sind. So entsteht beispielsweise bei dem häufig in organischen Zellen verwendeten Leitsalz $LiPF_6$ durch Reaktion mit Wasserspuren sehr reaktiver, aggressiver Fluorwasserstoff (HF). Aufgrund dessen muss bei der Herstellung derartiger wiederaufladbarer Batteriezellen mit einem organischen Elektrolyten auf eine Minimierung des im Elektrolyten und den Zellkomponenten enthaltenen Restwassergehalts geachtet werden. Die Produktion findet deshalb oft in kostenintensiven Trockenräumen mit extrem niedriger Luftfeuchtigkeit statt. Die zuvor beschriebenen Probleme im Hinblick auf die Stabilität und die langfristige Betriebssicherheit sind besonders schwerwiegend bei der Entwicklung von organischen Lithium-Ionen-Zellen, die zum einen sehr gute elektrische Energie- und Leistungsdaten und zum anderen eine sehr hohe Betriebssicherheit und Lebensdauer, insbesondere eine hohe Zahl nutzbarer Lade- und Entladezyklen aufweisen.

Eine aus dem Stand der Technik bekannte Weiterentwicklung sieht daher die Verwendung eines Elektrolyten auf Schwefeldioxid ($SO_2$)-Basis anstatt eines or-ganischen Elektrolyten für wiederaufladbare Batteriezellen vor. Wiederaufladbare Batteriezellen, welche einen auf $SO_2$-basierenden Elektrolyten enthalten, weisen unter anderem eine hohe ionische Leitfähigkeit auf. Unter dem Begriff "auf $SO_2$-basierender Elektrolyt" ist ein Elektrolyt zu verstehen, der $SO_2$ nicht nur als Zusatz in geringer Konzentration enthält, sondern bei dem die Beweglichkeit der Ionen des Leitsalzes, das in dem Elektrolyten enthalten ist und den Ladungstransport bewirkt, zumindest teilweise, größtenteils oder sogar vollständig durch $SO_2$ gewährleistet ist. Das $SO_2$ dient also als Lösungsmittel für das Leitsalz. Das Leitsalz kann mit dem gasförmigen $SO_2$ einen flüssigen Solvatkomplex bilden, wobei das $SO_2$ gebunden und der Dampfdruck gegenüber dem reinen $SO_2$ merklich gesenkt wird. Es entstehen Elektrolyte mit niederem Dampfdruck. Derartige Elektrolyten auf $SO_2$-Basis haben im Vergleich zu den zuvor beschriebenen organischen Elektrolyten den Vorteil der Nichtbrennbarkeit. Sicherheitsrisiken, welche durch die Brennbarkeit des Elektrolyten bestehen, können dadurch ausgeschlossen werden.

Beispielsweise beschreibt das Dokument US 4 891 281 A eine nicht-wässrige elektrochemische Batteriezelle mit einem gut leitenden Elektrolyten. Dieser Elektrolyt weist einen niedrigen Dampfdruck auf und enthält Schwefeldioxid und ein darin gelöstes Alkalimetall- oder Erdalkalimetallsalz als Leitsalz. Als Beispiel für ein Alkalimetallsalz wird unter anderem $LiAlCl_4$ genannt (vgl. Beispiele 1-11 der US 4 891 281 A).

Die EP 1 201 004 B1 beschreibt einen auf $SO_2$-basierenden Elektrolyten mit der Zusammensetzung $LiAlCl_4$ * $SO_2$ in Kombination mit einer positiven Elektrode aus $LiCoO_2$. Zur Vermeidung von störenden Zersetzungsreaktionen bei der Überladung der wiederaufladbaren Batteriezelle ab einem Potential von 4,1 bis 4,2 Volt, wie beispielsweise die unerwünschte Bildung von Chlor ($Cl_2$) aus Lithiumtetrachloroaluminat ($LiAlCl_4$), schlägt die EP 1 201 004 B1 die Verwendung eines zusätzlichen Salzes vor.

Auch die EP 2534719 B1 offenbart einen auf $SO_2$-basierenden Elektrolyten mit unter anderem $LiAlCl_4$ als Leitsalz. Dieses $LiAlCl_4$ bildet mit dem $SO_2$ beispielsweise Komplexe der Formel $LiAlCl_4$* 1,5 mol $SO_2$ oder $LiAlCl_4$* 6 mol $SO_2$. Als positive Elektrode wird Lithiumeisenphosphat ($LiFePO_4$) verwendet. $LiFePO_4$ hat ein geringeres Ladepotential (3,7 V) im Vergleich zu $LiCoO_2$ (4,2 V). Die Problematik der unerwünschten Überladereaktionen tritt in dieser wiederaufladbaren Batteriezelle nicht auf, da für den Elektrolyten schädliche Potentiale von 4,1 Volt nicht erreicht werden.

Das Dokument WO 2017/178543 A1 offenbart auch einen schwefeldioxidhaltigen Elektrolyten für eine wiederaufladbare Batteriezelle. Hier umfasst das Leitsalz eine Verbindung mit der stöchiometrischen Formel $K(ASX_2)_p$, wobei K für ein Kation aus der Gruppe der Alkalimetalle mit p = 1, der Erdalkalimetalle mit p = 2 oder der Zinkgruppe mit p = 2 steht, A für ein Element aus der dritten Hauptgruppe steht, S für Schwefel steht und X für ein Halogen steht. Das Leitsalz ist in Schwefeldioxid gelöst ist (vgl. Seite 5, Zeilen 16-33 der WO 2017/178543 A1).

Ein Nachteil, der unter anderem auch bei diesen auf $SO_2$-basierenden Elektrolyten auftritt, besteht darin, dass etwaige in Anwesenheit von Restmengen an Wasser entstehende Hydrolyseprodukte mit den Zellkomponenten der wiederaufladbaren Batteriezelle reagieren und dadurch zur Bildung von unerwünschten Nebenprodukten führen. Aufgrund dessen muss bei der Herstellung derartiger wiederaufladbare Batteriezellen mit einem auf $SO_2$-basierenden Elektrolyten auf eine Minimierung des im Elektrolyten und den Zellkomponenten enthaltenen Restwassergehalts geachtet werden.

Ein weiteres Problem bei den auf $SO_2$-basierenden Elektrolyten besteht darin, dass viele, insbesondere auch für organische Lithium-Ionen-Zellen bekannte Leitsalze nicht in $SO_2$ löslich sind. Messungen ergaben, dass $SO_2$ ein schlechtes Lösungsmittel für viele Salze ist, wie z.B. Lithiumfluorid (LiF), Lithiumbromid (LiBr), Lithiumsulfat ($Li_2SO_4$), Lithiumbis(oxalato)borat (LiBOB), Lithiumhexafluoroarsenat ($LiAsF_6$), Lithiumtetrafluorborat ($LiBF_4$), Trilithiumhexafluoroaluminat ($Li_3AlF_6$), Lithiumhexafluoroantimonat ($LiSbF_6$), Lithium Difluoro(oxalato)borat ($LiBF_2C_2O_4$), Lithiumbis(trifluoromethansulfonyl)imid (LiTFSI), Lithiummetaborat ($LiBO_2$), Lithiumaluminat ($LiAlO_2$), Lithiumtriflat ($LiCF_3SO_3$) und Lithiumchlorsulfonat ($LiSO_3Cl$). Die Löslichkeiten dieser Salze liegen in $SO_2$ bei ca. $10^{-2}$ - $10^{-4}$ mol/L (Tabelle 1). Bei diesen geringen Konzentrationen kann davon ausgegangen werden, dass allenfalls nur geringe Leitfähigkeiten vorliegen, die für den sinnvollen Betrieb einer wiederaufladbaren Batteriezelle nicht ausreichend sind.

Tabelle 1: Löslichkeiten verschiedener Salze in $SO_2$

| Salz | Löslichkeit / mol/L in $SO_2$ | Salz | Löslichkeit / mol/L in $SO_2$ |
|---|---|---|---|
| LiF | $2{,}1\cdot10^{-3}$ | $LiPF_6$ | $1{,}5\cdot10^{-2}$ |
| LiBr | $4.9\cdot10^{-3}$ | $LiSbF_6$ | $2.8\cdot10^{-4}$ |
| $Li_2SO_4$ | $2.7\cdot10^{-4}$ | $LiBF_2(C_2O_4)$ | $1{,}4\cdot10^{-4}$ |
| $LiB(C_2O_4)_2$ | $3.2\cdot10^{-4}$ | $CF_3SO_2NLiSO_2CF_3$ | $1{,}5\cdot10^{-2}$ |
| $Li_3PO_4$ | - | $LiBO_2$ | $2.6\cdot10^{-4}$ |
| $Li_3AlF_6$ | $2{,}3\cdot10^{-3}$ | $LiAlO_2$ | $4.3\cdot10^{-4}$ |
| $LiBF_4$ | $1.7\cdot10^{-3}$ | $LiCF_3SO_3$ | $6.3\cdot10^{-4}$ |
| $LiAsF_6$ | $1{,}4\cdot10^{-3}$ | | |

Um die Einsatzmöglichkeiten sowie Eigenschaften von auf $SO_2$-basierenden Elektrolyten und wiederaufladbaren Batteriezellen, die diesen Elektrolyten enthalten, weiter zu verbessern, liegt der vorliegenden Erfindung einerseits die Aufgabe zugrunde, einen auf $SO_2$-basierenden Elektrolyten anzugeben, der gegenüber den aus dem Stand der Technik bekannten Elektrolyten

- ein breites elektrochemisches Fenster hat, sodass keine oxidative Elektrolytzersetzung an der positiven Elektrode auftritt;
- eine stabile Deckschicht auf der negativen Elektrode aufbaut, wobei die Deckschichtkapazität niedrig sein sollte und im weiteren Betrieb keine weitere reduktive Elektrolytzersetzung an der negativen Elektrode auftritt;
- durch ein breites elektrochemisches Fenster die Möglichkeit bietet, wiederaufladbare Batteriezellen mit Hochvoltkathoden zu betreiben;
- eine für Leitsalze gute Löslichkeit besitzt und damit ein guter Ionenleiter und elektronischer Isolator ist, damit der Ionentransport erleichtert und die Selbstentladung auf ein Minimum beschränkt werden kann;
- auch gegenüber anderen Komponenten der wiederaufladbaren Batteriezelle, wie Separatoren, Elektrodenmaterialien und Zellverpackungsmaterialien, inert ist,
- gegen verschiedene Missbräuche, wie elektrische, mechanische oder thermische, robust ist und
- eine gesteigerte Stabilität gegenüber Restmengen an Wasser in den Zellkomponenten von wiederaufladbaren Batteriezellen aufweist.

Derartige Elektrolyte sollen insbesondere in wiederaufladbaren Batteriezellen anwendbar sein, die gleichzeitig sehr gute elektrische Energie- und Leistungsdaten, eine hohe Betriebssicherheit und Lebensdauer, insbesondere eine hohe Zahl nutzbarer Lade- und Entladezyklen besitzen, ohne dass sich hierbei der Elektrolyt im Betrieb der wiederaufladbaren Batteriezelle zersetzt.

Andererseits besteht die Aufgabe der vorliegenden Erfindung darin, eine wiederaufladbare Batteriezelle anzugeben, die einen auf $SO_2$-basierenden Elektrolyten enthält und gegenüber den aus dem Stand der Technik bekannten wiederaufladbaren Batteriezellen

- verbesserte elektrische Leistungsdaten, insbesondere eine hohe Energiedichte,
- eine verbesserte Überladefähigkeit und Tiefentladefähigkeit,
- eine geringere Selbstentladung,
- eine gesteigerte Lebensdauer, insbesondere eine hohe Zahl nutzbarer Lade- und Entladezyklen,
- ein verringertes Gesamtgewicht,
- eine erhöhte Betriebssicherheit, auch unter den erschwerten Umweltbedingungen in einem Fahrzeug, und
- verringerte Produktionskosten

aufweist.

Gelöst wird diese Aufgabe durch einen auf $SO_2$-basierenden Elektrolyten mit den Merkmalen des Anspruchs 1 sowie einer wiederaufladbare Batteriezelle mit den Merkmalen des Anspruchs 14. Vorteilhafte Ausgestaltungen des erfindungsgemäßen Elektrolyten sind in den Ansprüchen 2 bis 13 definiert. Die Ansprüche 15 bis 24 beschreiben vorteilhafte Weiterbildungen der erfindungsgemäßen wiederaufladbaren Batteriezelle.

Ein erfindungsgemäßer, auf $SO_2$-basierender Elektrolyt für eine wiederaufladbare Batteriezelle umfasst zumindest ein erstes Leitsalz, welches die Formel (I)

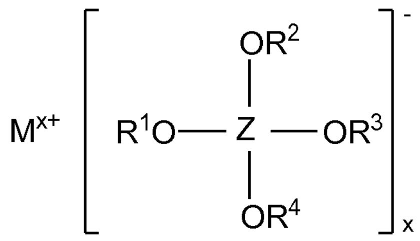

Formel (I)

aufweist. In Formel (I) ist M ein Metall, das ausgewählt ist aus der Gruppe, die gebildet wird von Alkalimetallen, Erdalkalimetallen, Metallen der Gruppe 12 des Periodensystems der Elemente und Aluminium. x ist eine ganze Zahl von 1 bis 3. Die Substituenten $R^1$, $R^2$, $R^3$ und $R^4$ sind unabhängig voneinander ausgewählt aus der Gruppe, die gebildet wird von $C_1$-$C_{10}$ Alkyl, $C_2$-$C_{10}$ Alkenyl, $C_2$-$C_{10}$ Alkinyl, $C_3$-$C_{10}$ Cycloalkyl, $C_6$-$C_{14}$ Aryl und $C_5$-$C_{14}$ Heteroaryl. Das Zentralatom Z ist entweder Aluminium oder Bor.

Der erfindungsgemäße auf $SO_2$-basierende Elektrolyt enthält $SO_2$ nicht nur als Zusatz in geringer Konzentration, sondern in Konzentrationen, bei denen die Beweglichkeit der Ionen des ersten Leitsalzes, das in dem Elektrolyten enthalten ist und den Ladungstransport bewirkt, zumindest teilweise, größtenteils oder sogar vollständig durch das $SO_2$ gewährleistet ist. Das erste Leitsalz ist in dem Elektrolyten gelöst und zeigt darin eine sehr gute Löslichkeit. Es kann mit dem gasförmigen $SO_2$ einen flüssigen Solvatkomplex bilden, in welchem das $SO_2$ gebunden wird. In diesem Fall sinkt der Dampfdruck des flüssigen Solvatkomplexes gegenüber dem reinen $SO_2$ deutlich und es entstehen Elektrolyte mit niederem Dampfdruck. Es liegt jedoch auch im Rahmen der Erfindung, dass es bei der Herstellung des erfindungsgemäßen Elektrolyten, je nachdem welche chemische Struktur das erste Leitsalz nach Formel (I) hat, zu keiner Dampfdruckerniedrigung kommen kann. Im letztgenannten Fall ist es bevorzugt, dass bei der Herstellung des erfindungsgemäßen Elektrolyten bei Tieftemperatur oder unter Druck gearbeitet wird. Der Elektrolyt kann auch mehrere Leitsalze der Formel (I) enthalten, welche in ihrer chemischen Struktur voneinander abweichen.

Der Begriff "$C_1$-$C_{10}$ Alkyl" umfasst im Sinne der vorliegenden Erfindung lineare oder verzweigte gesättigte Kohlenwasserstoffgruppen mit einem bis zehn Kohlenstoffatomen. Hierunter fallen insbesondere Methyl, Ethyl, n-Propyl, Isopropyl, n-butyl, sec-Butyl, iso-Butyl, tert-Butyl, n-Pentyl, iso-Pentyl, 2,2-Dimethylpropyl, n-Hexyl, iso-Hexyl, 2-Ethylhexyl, n-Heptyl, iso-Heptyl, n-Octyl, iso-Octyl, n-Nonyl, n-Decyl und dergleichen.

Der Begriff "$C_2$-$C_{10}$ Alkenyl" umfasst im Sinne der vorliegenden Erfindung ungesättigte lineare oder verzweigte Kohlenwasserstoffgruppen mit zwei bis zehn Kohlenstoffatomen, wobei die Kohlenwasserstoffgruppen zumindest eine C-C-Doppelbindung aufweisen. Hierunter fallen insbesondere Ethenyl, 1-Propenyl, 2- Propenyl, 1-n-Butenyl, 2-n-Butenyl, iso-Butenyl, 1-Pentenyl, 1-Hexenyl, 1-Heptenyl, 1-Octenyl, 1-Nonenyl, 1- Decenyl und dergleichen.

Der Begriff "$C_2$-$C_{10}$ Alkinyl" umfasst im Sinne der vorliegenden Erfindung ungesättigte lineare oder verzweigte Kohlenwasserstoffgruppen mit zwei bis zehn Kohlenstoffatomen, wobei die Kohlenwasserstoffgruppen zumindest eine C-C-Dreifachbindung aufweisen. Hierunter fallen insbesondere Ethinyl, 1-Propinyl, 2-Propinyl, 1-n-Butinyl, 2-n-Butinyl, iso-Butinyl, 1-Pentinyl, 1-Hexinyl, 1-Heptinyl, 1-Octinyl, 1-Noninyl, 1- Decinyl und dergleichen.

Der Begriff "$C_3$-$C_{10}$ Cycloalkyl" umfasst im Sinne der vorliegenden Erfindung zyklische, gesättigte Kohlenwasserstoffgruppen mit drei bis zehn Kohlenstoffatomen. Hierunter fallen insbesondere Cyclopropyl, Cyclobutyl, Cyclopentyl, Cyclohexyl, Cycloheptyl, Cyclohexyl, Cyclononyl und Cyclodecanyl.

Der Begriff "$C_6$-$C_{14}$ Aryl" umfasst im Sinne der vorliegenden Erfindung aromatische Kohlenwasserstoffgruppen mit sechs bis vierzehn ringständigen Kohlenstoffatomen. Hierunter fallen insbesondere Phenyl ($C_6H_5$ Gruppe), Naphthyl ($C_{10}H_7$ Gruppe) und Anthracyl ($C_{14}H_9$ Gruppe).

Der Begriff "$C_5$-$C_{14}$ Heteroaryl" umfasst im Sinne der vorliegenden Erfindung aromatische Kohlenwasserstoffgruppen mit fünf bis vierzehn ringständigen Kohlenwasserstoffatomen, bei welchen zumindest ein Kohlenwasserstoff-Atom durch ein Stickstoff-, Sauerstoff- oder Schwefel-Atom ersetzt bzw. ausgetauscht ist. Hierunter fallen insbesondere Pyrrolyl, Furanyl, Thiophenyl, Pyrridinyl, Pyranyl, Thiopyranyl und dergleichen. Alle der vorgenannten Kohlenwasserstoffgruppen sind jeweils über das Sauerstoff-Atom an Zentralatom gemäß Formel (I) gebunden.

Ein derartiger Elektrolyt hat gegenüber den aus dem Stand der Technik bekannten Elektrolyten den Vorteil, dass das darin enthaltene erste Leitsalz eine höhere Oxidationsstabilität aufweist und infolgedessen im Wesentlichen keine Zersetzung bei höheren Zellspannungen zeigt. Dieser Elektrolyt ist oxidationsstabil bevorzugt mindestens bis zu einem Potential von 4,0 Volt, weiter bevorzugt mindestens bis zu einem Potential von 4,2 Volt, weiter bevorzugt mindestens bis zu einem Potential von 4,4 Volt, weiter bevorzugt mindestens bis zu einem Potential von 4,6 Volt, weiter bevorzugt mindestens bis zu einem Potential von 4,8 Volt und besonders bevorzugt mindestens bis zu einem Potential von 5,0 Volt. Somit kommt es bei der Verwendung eines solchen Elektrolyten in einer wiederaufladbaren Batteriezelle zu einer nur geringen oder sogar gar keinen Elektrolytzersetzung innerhalb der Arbeitspotentiale beider Elektroden der wiederaufladbaren Batteriezelle. Hierdurch wird die Lebensdauer des Elektrolyten gegenüber den aus dem Stand der Technik bekannten Elektrolyten deutlich verlängert. Weiterhin ist ein solcher Elektrolyt auch tieftemperaturfest. Sofern sich in dem Elektrolyten noch geringe Restmengen an Wasser (im ppm-Bereich) befinden, so bildet der Elektrolyt bzw. das erste Leitsalz mit dem Wasser im Vergleich zu den aus dem Stand der Technik bekannten, auf $SO_2$-basierenden Elektrolyten Hydrolyseprodukte, welche deutlich weniger aggressiv gegenüber den Zellkomponenten sind. Aufgrund dessen spielt eine Wasserfreiheit des Elektrolyts im Vergleich zu den aus dem Stand der Technik bekannten, auf $SO_2$-basierenden Elektrolyten eine weniger bedeutende Rolle. Diese Vorteile des erfindungsgemäßen Elektrolyten überwiegen den Nachteil, der dadurch entsteht, dass das erste Leitsalz nach Formel (I) eine im Vergleich zu den aus dem Stand der Technik bekannten Leitsalze deutlich höhere Anionengröße aufweist. Diese höhere Anionengröße führt zu einer im Vergleich zur Leitfähigkeit von $LiAlCl_4$ geringeren Leitfähigkeit des ersten Leitsalzes gemäß Formel (I).

Ein weiterer Aspekt der Erfindung sieht eine wiederaufladbare Batteriezelle vor. Diese wiederaufladbare Batteriezelle enthält den zuvor beschriebenen, erfindungsgemäßen Elektrolyten oder einen Elektrolyten gemäß einer der nachfolgend beschriebenen, vorteilhaften Ausgestaltungen des erfindungsgemäßen Elektrolyten. Weiterhin umfasst die erfindungsgemäße wiederaufladbare Batteriezelle ein aktives Metall, zumindest eine positive Elektrode, zumindest eine negative Elektrode und ein Gehäuse.

In einer ersten vorteilhaften Ausgestaltung des erfindungsgemäßen Elektrolyten sind die Substituenten $R^1$, $R^2$, $R^3$ und $R^4$ unabhängig voneinander ausgewählt aus der Gruppe, die gebildet wird von

- $C_1$-$C_6$ Alkyl; bevorzugt von $C_2$-$C_4$ Alkyl; besonders bevorzugt von den Alkylgruppen 2-Propyl, Methyl und Ethyl;
- $C_2$-$C_6$ Alkenyl; bevorzugt von $C_2$-$C_4$ Alkenyl; besonders bevorzugt von den Alkenylgruppen Ethenyl und Propenyl;
- $C_2$-$C_6$-Alkinyl; bevorzugt von $C_2$-$C_4$-Alkinyl;
- $C_3$-$C_6$ Cycloalkyl;
- Phenyl; und
- $C_5$-$C_7$ Heteroaryl.

Der Begriff "$C_1$-$C_6$ Alkyl" umfasst im Fall dieser vorteilhaften Ausgestaltung des erfindungsgemäßen Elektrolyten lineare oder verzweigte gesättigte Kohlenwasserstoffgruppen mit einem bis sechs Kohlenwasserstoffgruppen, insbesondere Methyl, Ethyl, n-Propyl, Isopropyl, n-butyl, sec-Butyl, iso-Butyl, tert-Butyl, n-Pentyl, iso-Pentyl, 2,2-Dimethylpropyl, n-Hexyl und iso-Hexyl. Hierunter sind $C_2$-$C_4$ Alkyle bevorzugt. Besonders bevorzugt sind die $C_2$-$C_4$ Alkyle 2-Propyl, Methyl und Ethyl.

Der Begriff "$C_2$-$C_6$ Alkenyl" umfasst im Fall dieser vorteilhaften Ausgestaltung des erfindungsgemäßen Elektrolyten ungesättigte lineare oder verzweigte Kohlenwasserstoffgruppen mit zwei bis sechs Kohlenstoffatomen, wobei die Kohlenwasserstoffgruppen zumindest eine C-C-Doppelbindung aufweisen. Hierunter fallen insbesondere Ethenyl, 1-Propenyl, 2- Propenyl, 1-n-Butenyl, 2-n-Butenyl, iso-Butenyl, 1-Pentenyl und 1-Hexenyl, wobei $C_2$-$C_4$ Alkenyle bevorzugt sind. Besonders bevorzugt sind Ethenyl und 1-Propenyl.

Der Begriff "$C_2$-$C_6$-Alkinyl" umfasst im Fall dieser vorteilhaften Ausgestaltung des erfindungsgemäßen Elektrolyten ungesättigte lineare oder verzweigte Kohlenwasserstoffgruppen mit zwei bis sechs Kohlenstoffatomen, wobei die Kohlenwasserstoffgruppen zumindest eine C-C-Dreifachbindung aufweisen. Hierunter fallen insbesondere Ethinyl, 1-Propinyl, 2- Propinyl, 1-n-Butinyl, 2-n-Butinyl, iso-Butinyl, 1-Pentinyl und 1- Hexinyl. Bevorzugt hierunter sind $C_2$-$C_4$-Alkinyle.

Der Begriff "$C_3$-$C_6$ Cycloalkyl" umfasst im Fall dieser vorteilhaften Ausgestaltung des erfindungsgemäßen Elektrolyten zyklische gesättigte Kohlenwasserstoffgruppen mit drei bis sechs Kohlenstoffatomen. Hierunter fallen insbesondere Cyclopropyl, Cyclobutyl, Cyclopentyl und Cyclohexyl.

Der Begriff "$C_5$-$C_7$ Heteroaryl" umfasst im Fall dieser vorteilhaften Ausgestaltung des erfindungsgemäßen Elektrolyten Phenyl und Naphtyl.

Zur Verbesserung der Löslichkeit des ersten Leitsalzes in dem auf $SO_2$-basierenden Elektrolyten sind die Substituenten $R^1$, $R^2$, $R^3$ und $R^4$ durch mindestens ein Fluoratom und/oder durch mindestens eine chemische Gruppe substituiert, wobei die chemische Gruppe ausgewählt ist aus der Gruppe, die gebildet wird von $C_1$-$C_4$-Alkyl, $C_2$-$C_4$-Alkenyl, $C_2$-$C_4$-Alkinyl, Phenyl und Benzyl. Die chemischen Gruppen $C_1$-$C_4$-Alkyl, $C_2$-$C_4$-Alkenyl, $C_2$-$C_4$-Alkinyl, Phenyl und Benzyl weisen dieselben Eigenschaften bzw. chemischen Strukturen auf, wie die zuvor beschriebenen Kohlenwasserstoffgruppen. Substituiert bedeutet in diesem Zusammenhang, dass einzelne Atome oder Atomgruppen der Substituenten $R^1$, $R^2$, $R^3$ und $R^4$ durch das Fluoratom und/oder durch die chemische Gruppe ersetzt sind.

Eine besonders hohe Löslichkeit des ersten Leitsalzes in dem auf $SO_2$-basierenden Elektrolyten kann dadurch erreicht werden, dass zumindest einer der Substituenten $R^1$, $R^2$, $R^3$ und $R^4$ eine $CF_3$-Gruppe oder eine $OSO_2CF_3$-Gruppe ist.

In einer weiteren vorteilhaften Ausgestaltung des erfindungsgemäßen Elektrolyten ist das erste Leitsalz ausgewählt aus der Gruppe, die gebildet wird von

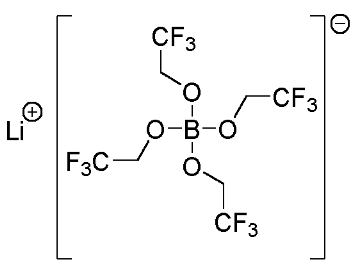

$Li[B(OCH_2CF_3)_4]$

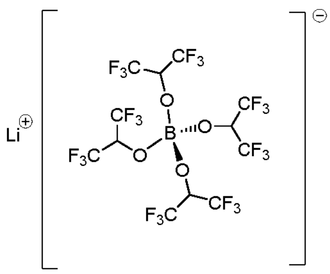

$Li[B(OCH(CF_3)_2)_4]$

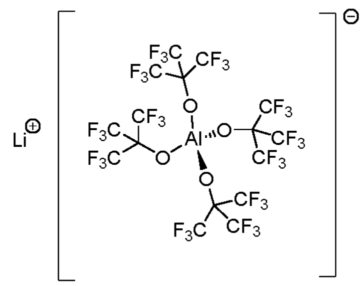

$Li[Al(OC(CF_3)_3)_4]$

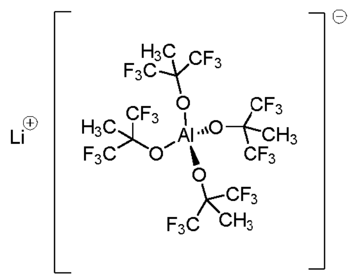

$Li[Al(OC(CH_3)(CF_3)_2)_4]$

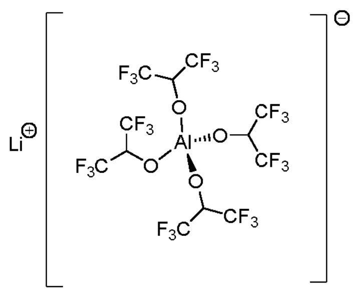

$Li[Al(OCH(CF_3)_2)_4]$.

Um die Leitfähigkeit und/oder weitere Eigenschaften des Elektrolyten an einen gewünschten Wert anzupassen, weist der Elektrolyt in einer weiteren vorteilhaften Ausgestaltung zumindest ein zweites, von dem ersten Leitsalz nach Formel (I) abweichendes Leitsalz auf. Das bedeutet, dass der Elektrolyt neben dem ersten Leitsalz ein oder auch weitere zweite Leitsalze enthalten kann, die sich in ihrer chemischen Zusammensetzung sowie ihrer chemischen Struktur von dem ersten Leitsalz unterscheiden.

In einer weiteren vorteilhaften Ausgestaltung des erfindungsgemäßen Elektrolyten ist das zweite Leitsalz eine Alkalimetallverbindung, insbesondere eine Lithiumverbindung. Die Alkalimetallverbindung oder die Lithiumverbindung sind ausgewählt aus der Gruppe, die gebildet wird von einem Aluminat, einem Halogenid, einem Oxalat, einem Borat, einem Phosphat, einem Arsenat und einem Gallat. Vorzugsweise ist das zweite Leitsalz ein Lithiumtetrahalogenoaluminat, insbesondere $LiAlCl_4$.

Des Weiteren enthält der Elektrolyt in einer weiteren vorteilhaften Ausgestaltung zumindest ein Additiv. Dieses Additiv ist vorzugsweise ausgewählt aus der Gruppe, die gebildet wird von Vinylencarbonat und seinen Derivaten, Vinylethylencarbonat und seinen Derivaten, Methylethylencarbonat und seinen Derivaten, Lithium(bisoxalato)borat, Lithiumdifluor(oxalato)borat, Lithiumtetrafluor(o-xalato)phosphat, Lithiumoxalat, 2-Vinylpyridin, 4-Vinylpyridin, cyclische Exomethylencarbonate, Sultone, cyclische und acyclische Sulfonate, acyclische Sulfite, cyclische und acyclische Sulfinate, organische Ester anorganischer Säuren, acyclische und cyclische Alkane, welche acyclischen und cyclischen Alkane einen Siedepunkt bei 1 bar von mindestens 36 °C aufweisen, aromatische Verbindungen, halogenierte cyclische und acyclische Sulfonylimide, halogenierte cyclische und acyclische Phosphatester, halogenierte cyclische und acyclische Phosphine, halogenierte cyclische und acyclische Phosphite, halogenierte cyclische und acyclische Phosphazene, halogenierte cyclische und acyclische Silylamine, halogenierte cyclische und acyclische halogenierte Ester, halogenierte cyclische und acyclische Amide, halogenierte cyclische und acyclische Anhydride und halogenierte organische Heterocyclen.

Bezogen auf das Gesamtgewicht der Elektrolytzusammensetzung weist der Elektrolyt in einer weiteren vorteilhaften Ausgestaltung folgende Zusammensetzung auf:

(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes und
(iv) 0 bis 10 Gew.-% des Additivs.

Wie bereits zuvor erwähnt, kann der Elektrolyt nicht nur ein erstes Leitsalz nach Formel (I) und ein zweites Leitsalz enthalten, sondern jeweils auch mehrere erste Leitsalze nach Formel (I) und mehrere zweite Leitsalze. Die zuvor genannten prozentualen Anteile schließen im letztgenannten Fall auch mehrere erste Leitsalze und mehrere zweite Leitsalze ein. Die Stoffmengenkonzentration des ersten Leitsalzes liegt im Bereich von 0,05 mol/l bis 10 mol/l, bevorzugt von 0,1 mol/l bis 6 mol/l und besonders bevorzugt von 0,2 mol/l bis 3,5 mol/l bezogen auf das Gesamtvolumen des Elektrolyten.

Eine weitere vorteilhafte Ausgestaltung der erfindungsgemäßen wiederaufladbaren Batteriezelle sieht vor, dass der Elektrolyt mindestens 0,1 Mol $SO_2$, bevorzugt mindestens 1 Mol $SO_2$, weiter bevorzugt mindestens 5 Mol $SO_2$, weiter bevorzugt mindestens 10 Mol $SO_2$ und besonders bevorzugt mindestens 20 Mol $SO_2$ je Mol Leitsalz enthält. Der Elektrolyt kann auch sehr hohe molare Anteile an $SO_2$ enthalten, wobei der bevorzugte obere Grenzwert mit 2600 Mol $SO_2$ je Mol Leitsalz angegeben werden kann und Obergrenzen von 1500, 1000, 500 und 100 Mol $SO_2$ je Mol Leitsalz in dieser Reihenfolge weiter bevorzugt sind. Der Begriff "je Mol Leitsalz" bezieht sich dabei auf alle Leitsalze, die im Elektrolyten enthalten sind. Auf $SO_2$-basierende Elektrolyte mit einem derartigen Konzentrationsverhältnis zwischen $SO_2$ und dem Leitsalz haben den Vorteil, dass sie im Vergleich zu den aus dem Stand der Technik bekannten Elektrolyten, welche beispielsweise auf einem organischen Lösungsmittelgemisch basieren, eine größere Menge an Leitsalz lösen können. Im Rahmen der Erfindung wurde festgestellt, dass überraschenderweise ein Elektrolyt mit einer relativ geringen Konzentration an Leitsalz trotz des damit verbundenen höheren Dampfdrucks vorteilhaft ist, insbesondere hinsichtlich dessen Stabilität über viele Lade- und Entladezyklen der wiederaufladbaren Batteriezelle. Die Konzentration an $SO_2$ im Elektrolyten wirkt sich auf dessen Leitfähigkeit aus. Somit kann durch die Wahl der $SO_2$-Konzentration die Leitfähigkeit des Elektrolyten an die geplante Verwendung einer mit diesem Elektrolyten betriebenen wiederaufladbaren Batteriezelle angepasst werden.

Der Gesamtgehalt von $SO_2$ und dem ersten Leitsalz kann größer als 50 Gewichtsprozent (Gew%) des Gewichts des Elektrolyten sein, bevorzugt größer als 60 Gew%, weiter bevorzugt größer als 70 Gew%, weiter bevorzugt größer als 80 Gew%, weiter bevorzugt größer als 85 Gew%, weiter bevorzugt größer als 90 Gew%, weiter bevorzugt größer als 95 Gew% oder weiter bevorzugt größer als 99 Gew%.

Der Elektrolyt kann mindestens 5 Gew% $SO_2$ bezogen auf die Gesamtmenge des in der wiederaufladbaren Batteriezelle enthaltenen Elektrolyten enthalten, wobei Werte von 20 Gew% $SO_2$, 40 Gew% $SO_2$ und 60 Gew% $SO_2$ weiter bevorzugt sind. Der Elektrolyt kann auch bis zu 95 Gew% $SO_2$ enthalten, wobei Maximalwerte von 80 Gew% $SO_2$ und 90 Gew% $SO_2$ in dieser Reihenfolge bevorzugt sind.

Es liegt im Rahmen der Erfindung, dass der Elektrolyt vorzugsweise einen nur geringen oder sogar gar keinen prozentualen Anteil an zumindest einem organischen Lösungsmittel aufweist. Vorzugsweise kann der Anteil an organischen Lösungsmitteln im Elektrolyten, welche beispielsweise in Form eines oder einer Mischung mehrerer Lösungsmittel vorhanden ist, höchstens 50 Gew% des Gewichts des Elektrolyten betragen. Besonders bevorzugt sind geringere Anteile von höchstens 40 Gew%, von höchstens 30 Gew%, von höchstens 20 Gew%, von höchstens 15 Gew%, von höchstens 10 Gew%, von höchstens 5 Gew% oder von höchstens 1 Gew% des Gewichts des Elektrolyten. Weiter bevorzugt ist der Elektrolyt frei von organischen Lösungsmitteln. Durch den nur geringen Anteil an organischen Lösungsmitteln oder sogar deren vollständige Abwesenheit ist der Elektrolyt entweder kaum oder gar nicht brennbar. Dies erhöht die Betriebssicherheit einer mit einem derartigen auf $SO_2$-basierenden Elektrolyten betriebenen wiederaufladbaren Batteriezelle. Besonders bevorzugt ist der auf $SO_2$-basierende Elektrolyt im Wesentlichen frei von organischen Lösungsmitteln.

Aktives Metall

Nachfolgend sind vorteilhafte Weiterbildungen der erfindungsgemäßen wiederaufladbaren Batteriezelle im Hinblick auf das aktive Metall beschrieben:
In einer ersten vorteilhaften Weiterbildung der wiederaufladbare Batteriezelle ist das aktive Metall

- ein Alkalimetall, insbesondere Lithium oder Natrium;
- ein Erdalkalimetall, insbesondere Calcium;
- ein Metall der Gruppe 12 des Periodensystems, insbesondere Zink; oder
- Aluminium.

Negative Elektrode

Nachfolgend sind vorteilhafte Weiterbildungen der erfindungsgemäßen wiederaufladbaren Batteriezelle im Hinblick auf die negative Elektrode beschrieben:

Eine weitere vorteilhafte Weiterbildung der wiederaufladbaren Batteriezelle sieht vor, dass die negative Elektrode eine Insertionselektrode ist. Diese Insertionselektrode enthält ein Insertionsmaterial als aktives Material, in welches die Ionen des aktiven Metalls während des Ladens der wiederaufladbare Batteriezelle eingelagert und aus welchem die Ionen des aktiven Metalls während des Entladens der wiederaufladbaren Batteriezelle ausgelagert werden können. Das bedeutet, dass sich die Elektrodenprozesse nicht nur an der Oberfläche der negativen Elektrode, sondern auch im Inneren der negativen Elektrode abspielen können. Wird beispielsweise ein Leitsalz auf Lithium-Basis verwendet, so können Lithiumionen während des Ladens der wiederaufladbaren Batteriezelle in das Insertionsmaterial eingelagert und während des Entladens der wiederaufladbare Batteriezelle aus diesem ausgelagert werden. Vorzugsweise enthält die negative Elektrode als aktives Material bzw. Insertionsmaterial Kohlenstoff, insbesondere in der Modifikation Graphit. Es liegt jedoch auch im Rahmen der Erfindung, dass der Kohlenstoff in Form von Naturgraphit (Flocken-Fördermittel oder gerundet), synthetischem Graphit (Mesophasen Graphit), graphitiertem Meso-Carbon MicroBeads (MCMB), mit kohlenstoffbeschichtetem Graphit oder amorphem Kohlenstoff vorliegt.

Die negative Elektrode umfasst in einer weiteren vorteilhaften Weiterbildung der erfindungsgemäßen wiederaufladbaren Batteriezelle Lithium-Interkalations-Anodenaktivmaterialien, die keinen Kohlenstoff enthalten, so zum Beispiel Lithium-Titanate (z.B. $Li_4Ti_5O_{12}$).

Eine weitere vorteilhafte Weiterbildung der erfindungsgemäßen wiederaufladbaren Batteriezelle sieht vor, dass die negative Elektrode mit Lithium Legierungsbildende-Anodenaktivmaterialien umfasst. Das sind zum Beispiel Lithiumspeichernde Metalle und Metalllegierungen (z.B. Si, Ge, Sn, $SnCo_xC_y$, $SnSi_x$ und dergleichen) und Oxide der Lithiumspeichernden Metalle und Metalllegierungen (z.B. $SnO_x$, $SiO_x$, oxidische Gläser von Sn, Si und dergleichen).

Die negative Elektrode enthält in einer weiteren vorteilhaften Weiterbildung der erfindungsgemäßen wiederaufladbaren Batteriezelle Konversions-Anodenaktivmaterialien. Diese Konversions-Anodenaktivmaterialien können beispielsweise Übergangsmetalloxide in Form von Manganoxiden ($MnO_x$), Eisenoxiden ($FeO_x$), Cobaltoxiden ($CoO_x$), Nickeloxiden ($NiO_x$), Kupferoxiden ($CuO_x$) oder Metallhydride in Form von Magnesiumhydrid ($MgH_2$), Titanhydrid ($TiH_2$), Aluminiumhydrid ($AlH_3$) und Bor-, Aluminium- und Magnesium-basierte ternäre Hydride und dergleichen sein.

In einer weiteren vorteilhaften Weiterbildung der erfindungsgemäßen wiederaufladbaren Batteriezelle umfasst die negative Elektrode ein Metall, insbesondere metallisches Lithium.

Eine weitere vorteilhafte Weiterbildung der erfindungsgemäßen wiederaufladbaren Batteriezelle sieht vor, dass die negative Elektrode porös ist, wobei die Porosität bevorzugt höchstens 50 %, weiter bevorzugt höchstens 45 %, weiter bevorzugt höchstens 40 %, weiter bevorzugt höchstens 35 %, weiter bevorzugt höchstens 30 %, weiter bevorzugt höchstens 20 % und besonders bevorzugt höchstens 10 % beträgt. Die Porosität stellt das Hohlraumvolumen zu Gesamtvolumen der negativen Elektrode dar, wobei das Hohlraumvolumen von sogenannten Poren bzw. Hohlräumen ausgebildet wird. Diese Porosität führt zu einer Vergrößerung der inneren Oberfläche der negativen Elektrode. Weiterhin verringert die Porosität die Dichte der negativen Elektrode und damit auch ihr Gewicht. Die einzelnen Poren der negativen Elektrode können im Betrieb vorzugsweise vollständig mit dem Elektrolyten gefüllt sein.

Eine weitere vorteilhafte Weiterbildung der erfindungsgemäßen Batteriezelle sieht vor, dass die negative Elektrode ein Ableitelement aufweist. Das bedeutet, dass die negative Elektrode neben dem aktiven Material bzw. Insertionsmaterial auch ein Ableitelement umfasst. Dieses Ableitelement dient dazu, den erforderlichen elektronisch leitenden Anschluss des aktiven Materials der negativen Elektrode zu ermöglichen. Hierfür steht das Ableitelement in Kontakt mit dem an der Elektrodenreaktion der negativen Elektrode beteiligten aktiven Material. Dieses Ableitelement kann planar in Form eines dünnen Metallblechs oder einer dünnen Metallfolie ausgebildet sein. Die dünne Metallfolie weist vorzugsweise eine durchbrochene bzw. netzartige Struktur auf. Das aktive Material der negativen Elektrode ist vorzugsweise auf die Oberfläche des dünnen Metallblechs oder der dünnen Metallfolie aufgebracht. Derartige planare Ableitelemente weisen eine Dicke im Bereich von 5 $\mu$m bis 50 $\mu$m auf. Eine Dicke des planaren Ableitelements im Bereich von 10 $\mu$m bis 30 $\mu$m ist bevorzugt. Bei der Verwendung von planaren Ableitelementen kann die negative Elektrode eine Gesamtdicke von mindestens 20 $\mu$m, bevorzugt mindestens 40 $\mu$m und besonders bevorzugt mindestens 60 $\mu$m aufweisen. Die maximalen Dicke beträgt höchstens 200 $\mu$m, bevorzugt höchstens 150 $\mu$m und besonders bevorzugt höchstens 100 $\mu$m. Die flächenspezifische Kapazität der negativen Elektrode weist bei der Verwendung eines planaren Ableitelements vorzugsweise mindestens 0,5 $mAh/cm^2$ auf, wobei folgende Werte in dieser Reihenfolge weiter bevorzugt sind: 1 $mAh/cm^2$, 3 $mAh/cm^2$, 5 $mAh/cm^2$, 10 $mAh/cm^2$.

Weiterhin besteht auch die Möglichkeit, dass das Ableitelement dreidimensional in Form einer porösen Metallstruktur, insbesondere in Form eines Metallschaums ausgebildet sein kann. Der Begriff "dreidimensionale poröse Metallstruktur" bezeichnet dabei jede aus Metall bestehende Struktur, die sich nicht nur wie das dünne Metallblech bzw. die Metallfolie über Länge und Breite der flächigen Elektrode erstreckt, sondern auch über deren Dickendimension. Die dreidimensionale poröse Metallstruktur ist derartig porös, dass das aktive Material der negativen Elektrode in die Poren der Metallstruktur eingearbeitet werden kann. Bei der Menge an eingearbeitetem bzw. aufgebrachten aktivem Material handelt es sich um die Beladung der negativen Elektrode. Wenn das Ableitelement dreidimensional in Form einer porösen Metallstruktur, insbesondere in Form eines Metallschaums ausgebildet ist, dann weist die negative Elektrode vorzugsweise eine Dicke von mindestens 0,2 mm, bevorzugt mindestens 0,3 mm, weiter bevorzugt mindestens 0,4 mm, weiter bevorzugt mindestens 0,5 mm und besonders bevorzugt mindestens 0,6 mm auf. Die Dicke der Elektroden ist in diesem Fall deutlich größer im Vergleich zu negativen Elektroden, welche bei organischen Lithium-Ionen-Zellen Anwendung finden. Eine weitere vorteilhafte Ausgestaltung sieht vor, dass die flächenspezifische Kapazität der negativen Elektrode bei der Verwendung eines dreidimensionalen Ableitelements in Form eines Metallschaums, insbesondere in Form eines Metallschaums vorzugsweise mindestens 2,5 $mAh/cm^2$ beträgt, wobei folgende Werte in dieser Reihenfolge weiter bevorzugt sind: 5 $mAh/cm^2$, 10 $mAh/cm^2$, 15 $mAh/cm^2$, 20 $mAh/cm^2$, 25 $mAh/cm^2$, 30 $mAh/cm^2$. Wenn das Ableitelement dreidimensional in Form einer porösen Metallstruktur, insbesondere in Form eines Metallschaums ausgebildet ist, beträgt die Menge des aktiven Materials der negativen Elektrode, d.h. die Beladung der Elektrode, bezogen auf ihre Fläche, mindestens 10 $mg/cm^2$, bevorzugt mindestens 20 $mg/cm^2$, weiter bevorzugt mindestens 40 $mg/cm^2$, weiter bevorzugt mindestens 60 $mg/cm^2$, weiter bevorzugt mindestens 80 $mg/cm^2$ und besonders bevorzugt mindestens 100 $mg/cm^2$. Diese Beladung der negativen Elektrode wirkt sich positiv auf den Ladevorgang sowie den Entladevorgang der wiederaufladbaren Batteriezelle aus.

Die negative Elektrode weist in einer weiteren vorteilhaften Weiterbildung der erfindungsgemäßen Batteriezelle zumindest ein Bindemittel auf. Dieses Bindemittel ist vorzugsweise ein fluoriertes Bindemittel, insbesondere ein Polyvinylidenfluorid und/oder ein Terpolymer, das aus Tetrafluorethylen, Hexafluorpropylen und Vinylidenfluorid ausgebildet ist. Es kann jedoch auch ein Bindemittel sein, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Weiterhin kann das Bindemittel auch aus einem Polymer bestehen, das auf monomeren Styrol- und Butadien-Struktureinheiten basiert. Außerdem kann das Bindemittel auch ein Bindemittel aus der Gruppe der Carboxymethylcellulosen sein. Das Bindemittel liegt in der negativen Elektrode vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der negativen Elektrode vor.

## Positive Elektrode

Nachfolgend sind vorteilhafte Weiterbildungen der erfindungsgemäßen wiederaufladbaren Batteriezelle im Hinblick auf die positive Elektrode beschrieben:
Die positive Elektrode enthält in einer weiteren vorteilhaften Weiterbildung der erfindungsgemäßen Batteriezelle als aktives Material zumindest eine Interkalationsverbindung. Unter dem Begriff "Interkalationsverbindung" ist im Sinne der vorliegenden Erfindung eine Unterkategorie der zuvor beschriebenen Insertionsmaterialien zu verstehen. Diese Interkalationsverbindung fungiert als Wirtsmatrix, welche Leerstellen aufweist, die untereinander verbunden sind. In diese Leerstellen können die Ionen des aktiven Metalls während des Entladevorgangs der wiederaufladbaren Batteriezelle eindiffundieren und dort eingelagert werden. Im Rahmen dieser Einlagerung der Ionen des aktiven Metalls kommt es in der Wirtsmatrix nur zu geringen oder gar keinen strukturellen Änderungen. Vorzugsweise weist die Interkalationsverbindung die Zusammensetzung $Li_xM'_yM''_zO_a$ auf, worin

- M' mindestens ein Metall ist, das ausgewählt ist aus der Gruppe, die gebildet wird von den Elementen Ti, V, Cr, Mn, Fe, Co, Ni, Cu und Zn;
- M" mindestens ein Element ist, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente;
- x und y größer 0 sind;
- z größer oder gleich 0 ist; und
- a ist größer 0.

Die Indizes y und z beziehen sich dabei auf die Gesamtheit der Metalle und Elemente, die durch M' bzw. M" repräsentiert werden. Umfasst zum Beispiel M' zwei Metalle $M'_1$ und $M'_2$, so gilt für den Index y: y=y1+y2, wobei y1 und y2 die Indizes der Metalle $M'_1$ und $M'_2$ darstellen. Die Indizes x, y, z und a müssen so gewählt werden, dass eine Ladungsneutralität innerhalb der Zusammensetzung herrscht.

Bevorzugt sind Zusammensetzungen der Formel $Li_xM'_yM''_zO_4$. In einer weiteren vorteilhaften Weiterbildung der erfindungsgemäßen wiederaufladbaren Batteriezelle sind M' Eisen und M" Phosphor in der Zusammensetzung $Li_xM'_yM''_zO_4$. In diesem Fall handelt es sich bei der Interkalationsverbindung um Lithiumeisenphosphat ($LiFePO_4$). Eine andere vorteilhafte Weiterbildung der erfindungsgemäßen wiederaufladbaren Batteriezelle sieht vor, dass M' Mangan und M" Cobalt in der Zusammensetzung $Li_xM'_yM''_zO_4$ sind. In diesem Fall handelt es sich bei der Interkalationsverbindung um Lithiumcobaltmanganoxid ($LiCoMnO_4$). Mit $LiCoMnO_4$ lassen sich sogenannte Hochvoltelektroden für Hochenergiezellen mit einer Zellspannung von über 5 Volt herstellen. Dieses $LiCoMnO_4$ ist vorzugsweise $Mn^{3+}$ frei.

Eine andere vorteilhafte Weiterbildung der erfindungsgemäßen wiederaufladbaren Batteriezelle sieht vor, dass M' aus den Metallen Nickel und Mangan besteht und M" Cobalt ist. Es handelt sich dabei um Zusammensetzungen der Formel $Li_xNi_{y1}Mn_{y2}Co_zO_2$ (NMC). Beispiele für diese Interkalationsverbindungen aus Lithiumnickelmangancobaltoxid sind $LiNi_{1/3}Mn_{1/3}Co_{1/3}O_2$ (NMC111), $LiNi_{0.6}Mn_{0.2}Co_2O_2$ (NMC622) und $LiNi_{0.8}Mn_{0.1}Co_{0.1}O_2$ (NMC811).

Hochvoltelektroden können mindestens bis zu einem oberen Potential von 4,0 Volt, weiter bevorzugt mindestens bis zu einem Potential von 4,2 Volt, weiter bevorzugt mindestens bis zu einem Potential von 4,4 Volt, weiter bevorzugt mindestens bis zu einem Potential von 4,6 Volt, weiter bevorzugt mindestens bis zu einem Potential von 4,8 Volt und besonders bevorzugt mindestens bis zu einem Potential von 5,0 Volt in der erfindungsgemäßen wiederaufladbaren Batteriezelle gezykelt werden.

Eine weitere vorteilhafte Weiterbildung der erfindungsgemäßen wiederaufladbaren Batteriezelle sieht vor, dass die positive Elektrode zumindest eine Metallverbindung enthält. Diese Metallverbindung ist ausgewählt aus der Gruppe, die gebildet wird von einem Metalloxid, einem Metallhalogenid und einem Metallphosphat. Vorzugsweise ist das Metall dieser Metallverbindung ein Übergangsmetall der Ordnungszahlen 22 bis 28 des Periodensystems der Elemente, insbesondere Kobalt, Nickel, Mangan oder Eisen.

Eine weitere vorteilhafte Weiterbildung der erfindungsgemäßen Batteriezelle sieht vor, dass die positive Elektrode ein Ableitelement aufweist. Das bedeutet, dass die positive Elektrode neben dem aktiven Material auch ein Ableitelement umfasst. Dieses Ableitelement dient dazu, den erforderlichen elektronisch leitenden Anschluss des aktiven Materials der positiven Elektrode zu ermöglichen. Hierfür steht das Ableitelement in Kontakt mit dem an der Elektrodenreaktion der positiven Elektrode beteiligten aktiven Material.

Dieses Ableitelement kann planar in Form eines dünnen Metallblechs oder einer dünnen Metallfolie ausgebildet sein. Die dünne Metallfolie weist vorzugsweise eine durchbrochene bzw. netzartige Struktur auf. Das aktive Material der positiven Elektrode ist vorzugsweise auf die Oberfläche des dünnen Metallblechs oder der dünnen Metallfolie aufgebracht. Derartige planare Ableitelemente weisen eine Dicke im Bereich von 5 $\mu m$ bis 50 $\mu m$ auf. Eine Dicke des planaren Ableitelements im Bereich von 10 $\mu m$ bis 30 $\mu m$ ist bevorzugt. Bei der Verwendung von planaren Ableitelementen kann die positive Elektrode eine Gesamtdicke von mindestens 20 $\mu m$, bevorzugt mindestens 40 $\mu m$ und besonders bevorzugt mindestens 60 $\mu m$ aufweise. Die maximalen Dicke beträgt höchstens 200 $\mu m$, bevorzugt höchstens 150 $\mu m$ und besonders bevorzugt höchstens 100 $\mu m$. Die flächenspezifische Kapazität der positiven Elektrode weist bei der Verwendung eines planaren Ableitelements vorzugsweise mindestens 0,5 $mAh/cm^2$ auf, wobei folgende Werte in dieser Reihenfolge weiter bevorzugt sind: 1 $mAh/cm^2$, 3 $mAh/cm^2$, 5 $mAh/cm^2$, 10 $mAh/cm^2$.

Weiterhin besteht auch die Möglichkeit, dass das Ableitelement der positiven Elektrode dreidimensional in Form einer porösen Metallstruktur, insbesondere in Form eines Metallschaums ausgebildet ist. Die dreidimensionale poröse Metallstruktur ist derartig porös, dass das aktive Material der positiven Elektrode in die Poren der Metallstruktur eingearbeitet werden kann. Bei der Menge an eingearbeitetem bzw. aufgebrachten aktivem Material handelt es sich um die Beladung der positiven Elektrode. Wenn das Ableitelement dreidimensional in Form einer porösen Metallstruktur, insbesondere in Form eines Metallschaums ausgebildet ist, dann weist die positive Elektrode vorzugsweise eine Dicke von mindestens 0,2 mm, bevorzugt mindestens 0,3 mm, weiter bevorzugt mindestens 0,4 mm, weiter bevorzugt mindestens 0,5 mm und besonders bevorzugt mindestens 0,6 mm auf. Eine weitere vorteilhafte Ausgestaltung sieht vor, dass die flächenspezifische Kapazität der positiven Elektrode bei der Verwendung eines dreidimensionalen Ableitelements in Form eines Metallschaums, insbesondere in Form eines Metallschaums vorzugsweise mindestens 2,5 $mAh/cm^2$ beträgt, wobei folgende Werte in dieser Reihenfolge weiter bevorzugt sind: 5 $mAh/cm^2$, 10 $mAh/cm^2$, 15 $mAh/cm^2$, 20 $mAh/cm^2$, 25 $mAh/cm^2$, 30 $mAh/cm^2$. Wenn das Ableitelement dreidimensional in Form einer porösen Metallstruktur, insbesondere in Form eines Metallschaums ausgebildet ist, beträgt die Menge des aktiven Materials der positiven Elektrode, d.h. die Beladung der Elektrode, bezogen auf ihre Fläche, mindestens 10 $mg/cm^2$, bevorzugt mindestens 20 $mg/cm^2$, weiter bevorzugt mindestens 40 $mg/cm^2$, weiter bevorzugt mindestens 60 $mg/cm^2$, weiter bevorzugt mindestens 80 $mg/cm^2$ und besonders bevorzugt mindestens 100 $mg/cm^2$. Diese Beladung der positiven Elektrode wirkt sich positiv auf den Ladevorgang sowie den Entladevorgang der wiederaufladbaren Batteriezelle aus.

Die positive Elektrode weist in einer weiteren vorteilhaften Weiterbildung der erfindungsgemäßen Batteriezelle zumindest ein Bindemittel auf. Dieses Bindemittel ist vorzugsweise ein fluoriertes Bindemittel, insbesondere ein Polyvinylidenfluorid und/oder ein Terpolymer, das aus Tetrafluorethylen, Hexafluorpropylen und Vinylidenfluorid ausgebildet ist. Es kann jedoch auch ein Bindemittel sein, welches aus einem Polymer besteht, das aus monomeren Struktureinheiten einer konjugierten Carbonsäure oder aus dem Alkali-, Erdalkali- oder Ammoniumsalz dieser konjugierten Carbonsäure

oder aus einer Kombination daraus aufgebaut ist. Weiterhin kann das Bindemittel auch aus einem Polymer bestehen, das auf monomeren Styrol- und Butadien-Struktureinheiten basiert. Außerdem kann das Bindemittel auch ein Bindemittel aus der Gruppe der Carboxymethylcellulosen sein. Das Bindemittel liegt in der positiven Elektrode vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der positiven Elektrode vor.

Aufbau der wiederaufladbaren Batteriezelle

Nachfolgend sind vorteilhafte Weiterbildungen der erfindungsgemäßen wiederaufladbaren Batteriezelle im Hinblick auf deren Aufbau beschrieben:
Um die Funktion der wiederaufladbaren Batteriezelle weiter zu verbessern, sieht eine weitere vorteilhafte Weiterbildung der erfindungsgemäßen wiederaufladbaren Batteriezelle vor, dass die wiederaufladbaren Batteriezelle mehrere negative Elektroden und mehrere positive Elektroden umfasst, die alternierend gestapelt in dem Gehäuse angeordnet sind. Hierbei sind die positiven Elektroden und die negativen Elektroden vorzugsweise jeweils durch Separatoren voneinander elektrisch getrennt.

Der Separator kann aus einem Vlies, einer Membran, einem Gewebe, einem Gewirke, einem organischen Material, einem anorganischen Material oder aus einer Kombination hiervon ausgebildet sein. Organische Separatoren können aus unsubstituierten Polyolefinen (z.B. Polypropylen oder Polyethylen), partiell bis vollständig halogensubstituierten Polyolefinen (z.B. partiell bis ganz fluorsubstituiert, insbesondere PVDF, ETFE, PTFE), Polyestern, Polyamiden oder Polysulfonen bestehen. Separatoren, die eine Kombination von organischen und anorganischen Materialien enthalten, sind zum Beispiel Glasfaser-Textilmaterialien, bei denen die Glasfasern mit einer geeigneten Polymeren Beschichtung versehen sind. Die Beschichtung enthält vorzugsweise ein fluorhaltiges Polymer wie beispielsweise Polytetrafluorethylen (PTFE), Ethylen-Tetrafluorethylen (ETFE), Perfluorethylenpropylen (FEP), THV (Terpolymer aus Tetrafluorethylen, Hexafluorethylen und Vinylidenfluorid), ein Perfluoralkoxy-Polymer (PFA), Aminosilan, Polypropylen oder Polyethylen (PE). Der Separator kann im Gehäuse der wiederaufladbaren Batteriezelle auch gefaltet vorliegen, beispielsweise in Form eines sogenannten "Z-Foldings". Bei diesem Z-Folding ist ein streifenförmiger Separator durch bzw. um die Elektroden z-artig gefaltet. Weiterhin kann der Separator auch als Separatorpapier ausgebildet sein.

Es liegt auch im Rahmen der Erfindung, dass der Separator als Umhüllung ausgebildet sein kann, wobei jede positive Elektrode oder jede negative Elektrode von der Umhüllung umhüllt ist. Die Umhüllung kann aus einem Vlies, einer Membran, einem Gewebe, einem Gewirke, einem organischen Material, einem anorganischen Material oder aus einer Kombination hiervon ausgebildet sein.

Eine Umhüllung der positiven Elektrode führt zu einer gleichmäßigeren Ionenwanderung und Ionenverteilung in der wiederaufladbaren Batteriezelle. Je gleichmäßiger die Ionenverteilung, insbesondere in der negativen Elektrode ist, desto höher kann die mögliche Beladung der negativen Elektrode mit aktivem Material und infolgedessen die nutzbare Kapazität der wiederaufladbaren Batteriezelle sein. Gleichzeitig werden Risiken vermieden, die mit einer ungleichmäßigen Beladung und einer daraus resultierenden Abscheidung des aktiven Metalls verbunden sein können. Diese Vorteile wirken sich vor allem aus, wenn die positiven Elektroden der wiederaufladbaren Batteriezelle mit der Umhüllung umhüllt sind.

Die Flächenmaße der Elektroden und der Umhüllung können vorzugsweise solcherart aufeinander abgestimmt sein, dass die Außenabmessungen der Umhüllung der Elektroden und die Außenabmessungen der nicht umhüllten Elektroden mindestens in einer Dimension übereinstimmen.

Die Flächenausdehnung der Umhüllung kann vorzugsweise größer als die Flächenausdehnung der Elektrode sein. In diesem Fall erstreckt sich die Umhüllung über eine Begrenzung der Elektrode hinaus. Zwei die Elektrode beidseitig bedeckende Schichten der Umhüllung können daher am Rand der positiven Elektrode durch eine Randverbindung miteinander verbunden werden.

In einer weiteren vorteilhaften Ausgestaltung der erfindungsgemäßen wiederaufladbaren Batteriezelle weisen die negativen Elektroden eine Umhüllung auf, während die positiven Elektroden keine Umhüllung haben.

Weitere vorteilhafte Eigenschaften der Erfindung werden nachfolgend anhand von Figuren, Beispielen und Experimenten näher beschrieben und erläutert.

Figur 1: zeigt ein erstes Ausführungsbeispiel einer erfindungsgemäßen wiederaufladbaren Batteriezelle in einer Querschnittsdarstellung;

Figur 2: zeigt eine elektronenmikroskopische Aufnahme der dreidimensionalen porösen Struktur des Metallschaums des ersten Ausführungsbeispiels aus Figur 1 als Detaildarstellung;

Figur 3: zeigt ein zweites Ausführungsbeispiel einer erfindungsgemäßen wiederaufladbaren Batteriezelle in einer

Querschnittsdarstellung;

Figur 4: zeigt ein Detail des zweiten Ausführungsbeispiels aus Figur 3;

Figur 5: zeigt ein drittes Ausführungsbeispiel der erfindungsgemäßen wiederaufladbaren Batteriezelle in einer Explosionsdarstellung;

Figur 6: zeigt die Entladekapazität als Funktion der Zykelzahl von Vollzellen, die entweder einen Mischelektrolyt aus Verbindung 1 oder Verbindung 3 in einem Referenzelektrolyten oder den Referenzelektrolyten enthalten;

Figur 7: zeigt Lade- und Entlade-Potentialverläufe in Volt [V] als Funktion der prozentualen Ladung von Vollzellen, die entweder mit einem der drei Ausführungsbeispiele 1, 2 oder 3 eines erfindungsgemäßen Elektrolyten oder dem Referenzelektrolyten befüllt sind;

Figur 8: zeigt einen Potentialverlauf in Volt [V] als Funktion der prozentualen Ladung einer Vollzelle, die mit dem ersten Ausführungsbeispiel 1 des erfindungsgemäßen Elektrolyten befüllt ist;

Figur 9: zeigt Potentialverläufe in Volt [V] als Funktion der kumulierten Ladung von Vollzellen, die mit einem dritten Ausführungsbeispiel 3 eines erfindungsgemäßen Elektrolyten befüllt sind, in Abhängigkeit des Lade-/Entladestroms;

Figur 10: zeigt Mittelwerte für die Entladekapazitäten einer Referenz-Vollzelle, die mit dem Referenzelektrolyten befüllt ist, und einer Test-Vollzelle, die mit dem ersten Ausführungsbeispiel 1 des erfindungsgemäßen Elektrolyten befüllt ist, als Funktion der Zykelzahl;

Figur 11: zeigt den Verlauf des internen Widerstands der beiden Vollzellen aus Figur 10 über die Zykelzahl;

Figur 12: zeigt die Leitfähigkeit in [mS/cm] des ersten Ausführungsbeispiels 1 des erfindungsgemäßen Elektrolyten in Abhängigkeit der Konzentration; und

Figur 13: zeigt das Potenzial in [V] von einer Referenz-Vollzelle und zwei Test-Vollzellen beim Laden einer negativen Elektrode gegen Lithium als Funktion der Kapazität, die bezogen ist auf die theoretische Kapazität der negativen Elektrode, während einer Deckschichtbildung auf der negativen Elektrode.

Figur 1 zeigt ein erstes Ausführungsbeispiel einer erfindungsgemäßen wiederaufladbaren Batteriezelle 2 in Querschnittsdarstellung. Diese wiederaufladbare Batteriezelle 2 ist als prismatische Zelle ausgebildet und weist unter anderem ein Gehäuse 1 auf. Dieses Gehäuse 1 umschließt eine Elektrodenanordnung 3, die drei positive Elektroden 4 und vier negative Elektroden 5 umfasst. Die positiven Elektroden 4 und die negativen Elektroden 5 sind in der Elektrodenanordnung 3 alternierend gestapelt angeordnet. Das Gehäuse 1 kann jedoch auch mehr positive Elektroden 4 und/oder negative Elektroden 5 aufnehmen. Generell ist es bevorzugt, wenn die Anzahl der negativen Elektroden 5 um eins größer als die Anzahl der positiven Elektroden 4 ist. Dies hat zur Folge, dass die äußeren Stirnflächen des Elektrodenstapels von den Elektrodenoberflächen der negativen Elektroden 5 gebildet werden. Die Elektroden 4, 5 sind über Elektrodenanschlüsse 6, 7 mit entsprechenden Anschlusskontakten 9, 10 der wiederaufladbaren Batteriezelle 2 verbunden. Die wiederaufladbare Batteriezelle 2 ist derart mit einem auf $SO_2$-basierenden Elektrolyten gefüllt, dass der Elektrolyt möglichst vollständig in sämtliche Poren bzw. Hohlräume, insbesondere innerhalb der Elektroden 4, 5, eindringt. Der Elektrolyt ist in Figur 1 nicht sichtbar. Im vorliegenden Ausführungsbeispiel enthalten die positiven Elektroden 4 eine Interkalationsverbindung als aktives Material. Bei dieser Interkalationsverbindung handelt es sich um $LiCoMnO_4$.

Die Elektroden 4, 5 sind im vorliegenden Ausführungsbeispiel flächig ausgebildet, d.h. als Schichten mit einem im Verhältnis zu ihrer Flächenausdehnung geringeren Dicke. Sie sind jeweils durch Separatoren 11 voneinander getrennt. Das Gehäuse 1 der wiederaufladbaren Batteriezelle 2 ist im Wesentlichen quaderförmig ausgebildet, wobei sich die Elektroden 4, 5 und die in Schnittdarstellung gezeigten Wände des Gehäuses 1 senkrecht zu der Zeichenebene erstrecken und im Wesentlichen gerade und eben geformt sind. Die wiederaufladbare Batteriezelle 2 kann jedoch auch als Wickelzelle ausgebildet sein, bei welcher die Elektroden aus dünnen Lagen bestehen, die zusammen mit einem Separatormaterial aufgewickelt sind. Die Separatoren 11 trennen einerseits die positive Elektrode 4 und die negative Elektrode 5 räumlich und elektrisch und sind andererseits unter anderem für die Ionen des aktiven Metalls durchlässig. Auf diese Weise entstehen große elektrochemisch wirksame Oberflächen, die eine entsprechend hohe Stromausbeute ermöglichen.

Die Elektroden 4, 5 weisen weiterhin ein in Figur 1 nicht dargestelltes Ableitelement auf, welches dazu dient, den erforderlichen elektronisch leitenden Anschluss des aktiven Materials der jeweiligen Elektrode zu ermöglichen. Dieses Ableitelement steht in Kontakt zu dem an der Elektrodenreaktion der jeweiligen Elektrode 4, 5 beteiligten aktiven Material (in Figur 1 nicht dargestellt). Das Ableitelement ist in Form eines porösen Metallschaums ausgebildet. Der Metallschaum erstreckt sich über die Dickendimension der Elektroden 4, 5. Das aktive Material der positiven Elektroden 4 und der negativen Elektroden 5 ist in die Poren dieses Metallschaums eingearbeitet, sodass es dessen Poren über die gesamte Dicke der Metallstruktur gleichmäßig füllt. Zur Verbesserung der mechanischen Festigkeit enthalten die positiven Elektroden 4 ein Bindemittel. Bei diesem Bindemittel handelt es sich um ein Fluorpolymer. Die negativen Elektroden 5 enthalten als aktives Material Kohlenstoff in einer als Insertionsmaterial zur Aufnahme von Lithiumionen geeigneten Form. Die Struktur der negativen Elektrode 5 ist ähnlich wie bei der positiven Elektrode 4.

Figur 2 zeigt eine elektronenmikroskopische Aufnahme der dreidimensionalen porösen Struktur des Metallschaums 18 des ersten Ausführungsbeispiels aus Figur 1. Anhand des angegebenen Maßstabes ist zu erkennen, dass die Poren P im Mittel einen Durchmesser von mehr als 100 $\mu$m haben, also verhältnismäßig groß sind.

Figur 3 zeigt ein zweites Ausführungsbeispiel der erfindungsgemäßen wiederaufladbaren Batteriezelle 2 in Querschnittsdarstellung. Dieses zweite Ausführungsbeispiel unterscheidet sich von dem in Figur 1 gezeigten, ersten Ausführungsbeispiel dadurch, dass die Elektrodenanordnung 3 eine positive Elektrode 4 und zwei negative Elektroden 5 umfasst. Die positive Elektrode 4 weist ein Ableitelement 34 in Form einer planaren Metallfolie auf, auf welche das aktive Material 24 der positiven Elektrode 4 beidseitig aufgebracht ist. Die negativen Elektroden 5 umfassen ebenfalls ein Ableitelement 35 in Form einer planaren Metallfolie, auf welche das aktive Material 25 der negativen Elektrode 4 beidseitig aufgebracht ist. Alternativ können die planaren Ableitelemente der Randelektroden, also der Elektroden, die den Elektrodenstapel abschließen, nur einseitig mit aktivem Material beschichtetet sein. Die nicht-beschichtete Seite zeigt zur Gehäusewand.

Figur 4 zeigt die planare Metallfolie, welche jeweils als Ableitelement 34, 35 für die positive Elektroden 4 und die negativen Elektroden 5 im zweiten Ausführungsbeispiel aus Figur 3 dient. Diese Metallfolie weist eine durchbrochene bzw. netzartige Struktur mit einer Dicke von 20 $\mu$m auf.

Figur 5 zeigt ein drittes Ausführungsbeispiel der erfindungsgemäßen wiederaufladbaren Batteriezelle 2 in Explosionsdarstellung. Dieses dritte Ausführungsbeispiel unterscheidet sich von den beiden zuvor erläuterten Ausführungsbeispielen dadurch, dass die positive Elektrode 4 von einer Umhüllung 13 umhüllt ist. Dabei ist eine Flächenausdehnung der Umhüllung 13 größer als eine Flächenausdehnung der positiven Elektrode 4, deren Begrenzung 14 in Figur 2 als gestrichelte Linie eingezeichnet ist. Zwei, die positive Elektrode 4 beidseitig bedeckende Schichten 15, 16 der Umhüllung 13 sind am umlaufenden Rand der positiven Elektrode 4 durch eine Randverbindung 17 miteinander verbunden.

<u>Beispiel 1</u>: Herstellung eines Referenzelektrolyten

Ein für die nachfolgend beschriebenen Beispiele verwendeter Referenzelektrolyt wurde nach dem in der Patentschrift EP 2 954 588 B1 beschriebenen Verfahren hergestellt. Zunächst wurde Lithiumchlorid (LiCl) unter Vakuum bei 120 °C für drei Tage getrocknet. Aluminiumpartikel (Al) wurden unter Vakuum für zwei Tage bei 450 °C getrocknet. LiCl, Aluminiumchlorid ($AlCl_3$) und Al wurden in einem Molverhältnis $AlCl_3$:LiCl:Al von 1:1,06:0,35 in einer Glasflasche mit einer Öffnung, die den Austritt von Gas ermöglicht, miteinander vermischt. Daraufhin wurde diese Mischung stufenweise zur Herstellung einer Salzschmelze wärmebehandelt. Nach dem Abkühlen wurde die gebildete Salzschmelze gefiltert, danach auf Raumtemperatur abgekühlt und letztlich $SO_2$ zugeführt bis das gewünschte molare Verhältnis von $SO_2$ zu $LiAlCl_4$ gebildet wurde. Der so gebildete Referenzelektrolyt hatte die Zusammensetzung $LiAlCl_4$ * x $SO_2$, wobei x abhängig von der zugeführten Menge an $SO_2$ ist.

<u>Beispiel 2</u>: Herstellung von drei Ausführungsbeispielen 1, 2 und 3 des erfindungsgemäßen Elektrolyten

Für die nachfolgend beschriebenen Experimente wurden drei Ausführungsbeispiele 1, 2 und 3 des erfindungsgemäßen Elektrolyten hergestellt (nachfolgend bezeichnet als Elektrolyte 1, 2 und 3). Hierfür wurden zunächst drei unterschiedliche erste Leitsalze nach Formel (I) gemäß einem in den folgenden Dokumenten beschriebenen Herstellungsverfahren hergestellt:

"I. Krossing, Chem. Eur. J. 2001, 7, 490;
S. M.Ivanova et al., Chem. Eur. J. 2001, 7, 503;
Tsujioka et al., J. Electrochem. Soc., 2004, 151, A1418"

Diese drei unterschiedlichen, ersten Leitsalze nach Formel (I) werden nachfolgend als Verbindungen 1, 2 und 3 bezeichnet. Sie stammen aus der Familie der Polyfluoroalkoxyaluminate und wurden gemäß folgender Reaktionsglei-

chung ausgehend von $LiAlH_4$ und dem entsprechenden Alkohol R-OH mit $R^1=R^2=R^3=R^4$ in Hexan hergestellt.

$$LiAlH_4 + 4\ HO\text{-}R \xrightarrow{\text{Hexan}} LiAl(OR)_4 + 4\ H_2$$

Hierdurch wurden die nachfolgend darstellten Verbindungen 1, 2 und 3 mit den Summen- bzw. Strukturformeln gebildet:

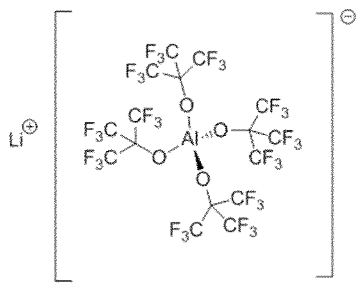

Li $[Al(OC(CF_3)_3)_4]$

Verbindung 1

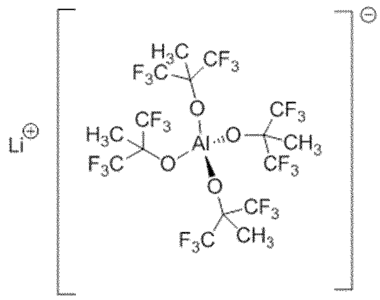

Li $[Al(OC(CH_3)(CF_3)_2)_4]$

Verbindung 2

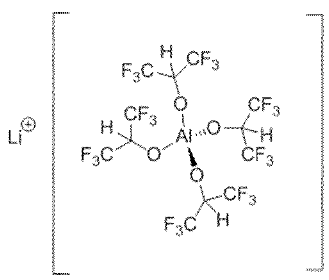

Li $[Al(OCH(CF_3)_2)_4]$

Verbindung 3

Zur Aufreinigung wurden die Verbindungen 1, 2 und 3 zunächst umkristallisiert. Hierdurch wurden Reste des Edukts $LiAlH_4$ aus dem ersten Leitsalz entfernt, da dieses Edukt möglicherweise mit eventuell vorhandenen Wasserspuren in $SO_2$ zur Funkenbildung führen könnte.

Danach erfolgte die Lösung der Verbindungen 1, 2 und 3 in $SO_2$. Hierbei wurde herausgefunden, dass sich die Verbindungen 1, 2 und 3 in $SO_2$ gut lösen.

Die Herstellung der Elektrolyte 1, 2 und 3 wurde bei Tieftemperatur oder unter Druck gemäß den nachfolgend aufgelisteten Verfahrensschritten 1 bis 4 durchgeführt:

1) Vorlage der jeweiligen Verbindung 1, 2 und 3 in jeweils einem Drucckolben mit Steigrohr,
2) Evakuieren der Druckkolben,
3) Einströmen von flüssigem $SO_2$ und
4) Wiederholung der Schritte 2 + 3 bis die Zielmenge an $SO_2$ zugegeben worden ist.

Die jeweilige Konzentration der Verbindungen 1, 2 und 3 in den Elektrolyten 1, 2 und 3 betrug 1 mol/l (Stoffmengenkonzentration bezogen auf 1 Liter des Elektrolyten), sofern in der Experimentbeschreibung nichts Anderes beschrieben ist. Mit den Elektrolyten 1, 2 und 3 und dem Referenzelektrolyten wurden die nachfolgend beschriebenen Experimente durchgeführt.

Beispiel 3: Herstellung von Vollzellen

Die in den nachfolgend beschriebenen Experimenten verwendeten Vollzellen sind wiederaufladbare Batteriezellen mit zwei negativen Elektroden und einer positiven Elektrode, welche jeweils durch einen Separator getrennt waren. Die positiven Elektroden wiesen $LiFePO_4$ als aktives Material, einen Leitfähigkeitsvermittler und ein Bindemittel auf. Die negativen Elektroden enthielten Graphit als aktives Material und ebenfalls ein Bindemittel. Die Vollzellen wurden jeweils mit dem für die Experimente benötigten Elektrolyten, d. h. entweder mit dem Referenzelektrolyten oder den Elektrolyten 1, 2 oder 3 befüllt.

Für jedes Experiment wurden mehrere, d.h. zwei bis vier identische Vollzellen hergestellt. Die in den Experimenten vorgestellten Ergebnisse sind jeweils Mittelwerte aus den für die identischen Vollzellen erhaltenen Messwerte.

Experiment 1: Untersuchung möglicher negativer Auswirkungen der Elektrolyten 1 und 3 auf das Zykelverhalten von Vollzellen

Um zu testen, ob der erfindungsgemäße Elektrolyt keine negativen Auswirkungen auf das Zykelverhalten von Vollzellen hat, wurden zunächst Mischelektrolyte hergestellt, die einen geringen Anteil von entweder Verbindung 1 oder Verbindung 3 in dem Referenzelektrolyten enthielten.

Hierzu wurden Mischelektrolyte bestehend aus 95 Gewichtsprozent (wt%) Referenzelektrolyt und 5 wt% Verbindung 1 bzw. 5 wt% Verbindung 3 hergestellt. Die beiden Mischelektrolyte wurden mit einem reinen Referenzelektrolyten (100 wt%) verglichen. Dazu wurden Experimente in Vollzellen gemäß Beispiel 3 durchgeführt. Hierfür wurden Vollzellen mit den jeweils unterschiedlichen Elektrolyten befüllt. Die Vollzellen wurden mit 50 mA bis zu einem Potential von 3,6 V geladen. Das Potential von 3,6 Volt wurde so lange beibehalten, bis der Strom auf einen Wert von 40 mA abgesunken war. Die Entladung erfolgte mit einem Strom von 50 mA bis zu einem Potential von 2,5 V. Es wurden 500 Lade-/Entladezyklen durchgeführt. Figur 6 zeigt drei Entladekurven, d.h. die Entladekapazitäten als Funktion der Zykelzahl. Alle Elektrolyte zeigen einen nahezu gleichen Verlauf der Entladekapazität.

Hieraus lässt sich schließen, dass die Elektrolyten 1 und 3 und somit auch das erste Leitsalz gemäß Formel (I) keine gravierenden negativen Effekte auf das Zykelverhalten haben.

Experiment 2: Funktion von erfindungsgemäßen Elektrolyten in einer Batteriezelle

Mit dem in Beispiel 1 hergestellten Referenzelektrolyten und den in Beispiel 2 hergestellten Elektrolyten 1, 2 oder 3 wurden Experimente in Vollzellen gemäß Beispiel 3 durchgeführt. Der Referenzelektrolyt sowie die Elektrolyten 1, 2 und 3 wiesen jeweils eine Konzentration von 0,6 mol/l an Leitsalz auf. Es wurden vier Vollzellen mit den Elektrolyten befüllt. Die Vollzellen wurden mit 50 mA bis zu einem Potential von 3,6 V geladen. Das Potential von 3,6 Volt wurde so lange beibehalten, bis der Strom auf einen Wert von 40 mA abgesunken war. Die Entladung erfolgte mit einem Strom von 50 mA bis zu einem Potential von 2,5 V. Figur 7 zeigt im oberen Bereich die Ladekurven mit Bezug zur Skala der linken y-Achse und im unteren Bereich die Entladekurven mit Bezug zur Skala der rechten y-Achse. Mit den Elektrolyten 1, 2 und 3 konnten die Vollzellen geladen und wieder entladen werden.

Experiment 3: Nachweis der Hochvoltfähigkeit der Elektrolyte 1, 2 und 3

Zum Nachweis der Hochvoltfähigkeit der Elektrolyte 1, 2 und 3 wurde ein Experiment in Vollzellen gemäß Beispiel 3 durchgeführt. Die Vollzelle wurde mit dem in Beispiel 2 beschriebenen Elektrolyten 1 befüllt, der die Verbindung 1 als erstes Leitsalz in einer Stoffmengenkonzentration von 1 mol/l, bezogen auf 1 Liter des Elektrolyten enthielt.

Figur 8 zeigt den Potentialverlauf in Volt [V] über der prozentualen Ladung, die auf die maximale Ladung der Vollzelle bezogen ist, der zuvor beschriebenen Vollzelle. Die Vollzelle wurde mit einer Stromstärke von 50 mA bis zu einem Potential von 5 V geladen. Das Potential wurde so lange gehalten, bis der Ladestrom auf 40 mA abgesunken war. Danach erfolgte die Entladung mit einer Stromstärke von 50 mA bis zu einem Entladepotential von 2,5 Volt. Figur 6 zeigt die in diesem Experiment 3 erhaltene Lade-/ Entladekurve der Vollzelle. Die Zykeleffizienz war größer 99,5 %. Das bedeutet, dass keine Kapazität für Neben- bzw. Überladereaktionen des Elektrolyten verbraucht wurden. Der Elektrolyt 1 ist in diesem Potentialbereich stabil. Daraus lässt sich schließen, dass der erfindungsgemäße Elektrolyt, welcher das erste Leitsalz enthält, auch für Hochenergiezellen, in welchen hohe Zellspannungen auftreten, verwendet werden kann, ohne dass hierbei das erste Leitsalz zersetzt wird.

Experiment 4: Zykeleffizienz

Das Lade-/ Entlade-Experiment 3 wurde nochmals wiederholt, mit dem Unterschied, dass die obere Potentialgrenze beim Laden von 3,6 Volt in 0,2 Volt-Schritten bis auf 5,0 Volt erhöht wurde. Es wurden also acht Zyklen durchgeführt. Tabelle 2 zeigt die jeweils erreichten Zykeleffizienzen.

Tabelle 2: Zykeleffizienz in Abhängigkeit des Ladepotentials

| Ladepotential | Zykeleffizienz |
|---|---|
| 3,60 | 99,7% |
| 3,80 | 99,6% |
| 4,00 | 99,7% |
| 4,20 | 99,7% |
| 4,40 | 99,7% |
| 4,60 | 99,7% |
| 4,80 | 99,7% |
| 5,00 | 99,7% |

Die erreichten Zykeleffizienzen sind für jedes Ladepotential identisch und zeigen ein stabiles Verhalten des Elektrolyten 1 im gesamten Potentialbereich bis 5,0 Volt.

Experiment 5:

Der erfindungsgemäße Elektrolyt 3 wurde in einem Zykelexperiment mit dem Referenzelektrolyten verglichen. Dazu wurden drei Vollzellen, wie in Beispiel 3 beschrieben, verwendet. Jeweils eine Vollzelle wurde mit dem Referenzelektrolyten und zwei Vollzellen mit dem Elektrolyten 3 befüllt. Es erfolgte eine Ladung der Vollzelle bis zu einem Potential von 3,6 Volt und eine Entladung bis 2,5 Volt. Die Vollzelle mit dem Referenzelektrolyten wurde mit einem Strom von 100 mA betrieben, die beiden Vollzellen mit dem Elektrolyt 3, angepasst an die geringere Leitfähigkeit, einmal mit 10 mA und einmal mit 5 mA ge- bzw. entladen. Figur 9 zeigt die erhaltenen Lade-/Entladekurven. Alle Vollzellen zeigen eine stabile Ladung und eine stabile Entladung. Bei kleineren Strömen erhöht sich die erreichbare Kapazität für den Elektrolyt 3.

Experiment 6: Vergleich der Entladekapazitäten und des internen Widerstands von Vollzellen mit Referenzelektrolyt und Elektrolyt 1

In diesem Experiment wurde der Einsatz des erfindungsgemäßen Elektrolyten als Alternative zum im Stand der Technik verwendeten Referenzelektrolyten untersucht.

Das Experiment wurde ebenfalls in den in Beispiel 3 beschriebenen Vollzellen durchgeführt. Die Vollzellen wurden entweder mit Referenzelektrolyt (nachfolgend bezeichnet als Referenz-Vollzelle) oder dem zuvor beschriebenen erfindungsgemäßen Elektrolyten 1 (nachfolgend bezeichnet als Test-Vollzelle) befüllt. Somit unterschieden sich die Referenz-Vollzelle und die Test-Vollzelle nur in der Art des verwendeten Elektrolyten.

Es wurden mehrere Zykelexperimente beginnend mit einem Formierungszyklus durchgeführt. Tabelle 3 zeigt die jeweils verwendeten Lade- bzw. Entladeströme und die Lade- bzw. Entladeschlussspannungen beim Laden bzw. Entladen der beiden Vollzellen. Zusätzlich ist noch die Grenze des Ladestromes ($I_{cutoff}$) bei der Ladeschlussspannung von 3,6 Volt angegeben. Zwischen dem Laden und dem Entladen der beiden Vollzellen wurde jeweils eine Pause von zehn Minuten eingelegt.

Tabelle 3: Daten der Zykelexperimente

| | |
|---|---|
| - Formation: Charge / Discharge | - 1 cycle: 15 mA to 125 mAh / 15 mA to 2.5V |
| - Cycling: Charge / Discharge | - 90 cycles: 50 mA to 3.6 V ($I_{cutoff}$ = 40 mA) / 50 mA to 2.5 V |
| - 24 h Rest | - 1 cycle: 50 mA to 3.6 V ($I_{cutoff}$ = 40 mA) / 24 h Rest / 50 mA to 2.5 V |
| - Cycling: Charge / Discharge | - 410 cycles: 50 mA to 3.6 V ($I_{cutoff}$ = 40 mA) / 50 mA to 2.5 V |

Figur 10 zeigt Mittelwerte für die Entladekapazitäten der beiden Vollzellen als Funktion der Zykelzahl. Die gestrichelte Linie mit langen Strichen zeigt die erhaltenen Mittelwerte für Entladekapazitäten der Test-Vollzelle. Hierfür wurden Mittelwerte aus drei identischen Messungen verwendet. Die gestrichelte Linie mit kurzen Strichen zeigt die erhaltenen Entladekapazitäten der Referenz-Vollzelle. Hierfür wurden Mittelwerte aus zwei identischen Messungen verwendet.

Diese Mittelwerte der Entladekapazitäten werden jeweils in Prozent der Nennkapazität ausgedrückt. Die Nennkapazität wird erhalten, indem von der theoretischen Kapazität der positiven Elektrode diejenige Kapazität subtrahiert wird, die im ersten Zyklus für die Bildung einer Deckschicht auf der negativen Elektrode verbraucht wird. Diese Deckschicht wird beim ersten Laden der Vollzelle auf der negativen Elektrode gebildet. Für diese Deckschichtbildung werden Lithiumionen irreversibel verbraucht, sodass der jeweiligen Vollzelle weniger zykelbare Kapazität für die Folgezyklen zur Verfügung steht.

Der Startwert der Entladekapazität beider Vollzellen liegt bei ca. 90 % der Nennkapazität. Beide Vollzellen zeigen einen Entladekapazitätsabfall über die Zykelanzahl. Der Kapazitätsabfall für die Referenz-Vollzelle betrug bis zum 500. Zyklus 19 % und wies dann eine Restkapazität von 71% auf. Die Test-Vollzelle hatte einen Entladekapazitätsabfall von 22 % und wies nach 500 Zyklen eine Restkapazität von 68 % auf. Der Kapazitätsverlauf beider Kurven ist ab dem 300. Zyklus nahezu parallel und deutet auf einen weiteren stabilen Verlauf hin. Das Verhalten der Vollzellen ist ähnlich und zeigt, dass der erfindungsgemäße Elektrolyt als Alternative zum Referenzelektrolyt eingesetzt werden kann.

Während des Experiments 6 wurde auch der Verlauf des internen Widerstands der beiden Vollzellen über die Zykelzahl aufgezeichnet. Figur 11 zeigt die Ergebnisse für die Referenz-Vollzelle und für die Test-Vollzelle. Der interne

Widerstand ist ein durch die Konstruktion der Vollzelle bedingter Verlustfaktor im Inneren der Vollzelle. Der interne Widerstand liegt bei der Referenz-Vollzelle bei etwas über 0,2 Ohm. Die Test-Vollzelle zeigt einen höheren internen Widerstand von anfänglich ca. 0,95 Ohm, der ab ca. Zyklus 200 stabil bei einem Wert von 0,8 Ohm liegt.

Diese Ergebnisse entsprechen den Erwartungen der Anmelderin, da die Lithiumionenleitung in einem Elektrolyten mit großen Anionen, die gemäß der vorliegenden Erfindung verwendet werden, etwas erschwert ist.

Experiment 7: Bestimmung von Leitfähigkeiten

Zur Bestimmung der Leitfähigkeit wurde der Elektrolyt 1 mit verschiedenen Konzentrationen der Verbindung 1 hergestellt. Für jede Konzentration der Verbindung 1 wurde die Leitfähigkeit des Elektrolyts 1 bestimmt, indem ein konduktives Messverfahren verwendet wurde. Dabei wurde nach Temperierung ein Zweielektrodensensor berührend in die Lösung gehalten und in einem Messbereich von 0 - 50 mS/cm gemessen. Tabelle 4 zeigt die verschiedene Konzentration, die dazugehörenden $SO_2$-Gehalte und die ermittelten Leitfähigkeitswerte.

Tabelle 4: Leitfähigkeit in Abhängigkeit der Konzentration der Verbindung 1 in dem Elektrolyt 1

| c der Verbindung 1 in mol/L | wt% SO2 | Leitfähigkeit in mS/cm |
|---|---|---|
| 1,00 | 34% | 13,6 |
| 0,60 | 60% | 24,7 |
| 0,40 | 75% | 20,8 |
| 0,20 | 87% | 11,7 |

Figur 12 zeigt die Leitfähigkeit des Elektrolyts 1 in Abhängigkeit der Konzentration der Verbindung 1. Zu sehen ist ein Maximum der Leitfähigkeit bei einer Konzentration der Verbindung 1 von 0,6 mol/L mit einem Wert von 24,7 mS/cm. Im Vergleich dazu haben die aus dem Stand der Technik bekannten, organischen Elektrolyten, wie z.B. LP30 (1 M LiPF6 / EC-DMC (1:1 Gew.)) eine Leitfähigkeit von nur ca. 10 mS/cm.

Experiment 8: Bestimmung einer für die Bildung einer Deckschicht auf der negativen Elektrode verbrauchten Kapazität

In diesem Experiment wurde die im ersten Zyklus für die Bildung einer Deckschicht auf der negativen Elektrode verbrauche Kapazität untersucht. Diese Deckschicht wird beim ersten Laden der Vollzelle auf der negativen Elektrode gebildet. Für diese Deckschichtbildung werden Lithiumionen irreversibel verbraucht, sodass der Vollzelle weniger zykelbare Kapazität für die Folgezyklen zur Verfügung steht.

Der Referenz-Elektrolyt, der Elektrolyt 1 und der Elektrolyt 3 wurden für dieses Experiment jeweils in einer Vollzelle untersucht. Der Aufbau entsprach dem in Beispiel 3 beschriebenen Aufbau. Der in einem ersten Experiment verwendete Referenzelektrolyt hatte die Zusammensetzung $LiAlCl4 * x SO_2$ mit $x > 1,5$. In einem zweiten und dritten Experiment wurden die Elektrolyten 1 und 3 untersucht.

Figur 13 zeigt das Potenzial in Volt der Vollzellen beim Laden der negativen Elektrode gegen Lithium als Funktion der Kapazität, die bezogen ist auf die theoretische Kapazität der negativen Elektrode. Hierbei zeigt die gepunktete Linie die Ergebnisse für den Referenzelektrolyten und die gestrichelte bzw. durchgezogene Linie die Ergebnisse für die erfindungsgenäßen Elektrolyten 1 und 3. Die drei dargestellten Kurven zeigen gemittelte Ergebnisse jeweils mehrerer Experimente mit den vorstehend beschriebenen Vollzellen. Zunächst wurden die Vollzellen mit einem Strom von 15 mA geladen, bis eine Kapazität von 125 mAh ($Q_{lad}$) erreicht war. Danach erfolgte die Entladung der Vollzellen mit 15 mA bis zum Erreichen eines Potentials von 2,5 Volt. Dabei erfolgte die Ermittlung der Entladekapazität ($Q_{ent}$).

Die Kapazität in % der Theorie, die zur Bildung der Deckschicht auf der negativen Elektrode verbraucht wurde, berechnet sich gemäß nachfolgend genannter Formel:

$$\text{Deckschichtkapazität} = (Q_{lad}\ (125mAh) - Q_{ent}\ (x\ mAh)) / Q_{NEL}$$

Bei $Q_{NEL}$ handelt es sich um die theoretische Kapazität der verwendeten negativen Elektrode. Die theoretische Kapazität berechnet sich im Fall von Graphit auf einen Wert von 372 mAh/g. Die absoluten Kapazitätsverluste liegen bei 7,58 % bzw. 11,51 % für die Elektrolyte 1 und 3 und bei 6,85 % für den Referenzelektrolyten. Die Kapazität für die Deckschichtbildung ist bei beiden erfindungsgemäßen Elektrolyten etwas höher als beim Referenzelektrolyten. Werte im Bereich von 7,5 % - 11,5 % für die absoluten Kapazitätsverluste sind gute Ergebnisse in Kombination mit der Möglichkeit Hochvoltkathoden bis 5 Volt einzusetzen.

Experiment 9: Tieftemperaturverhalten

Um das Tieftemperaturverhalten eines erfindungsgemäßen Elektrolyten im Vergleich zum Referenzelektrolyten zu bestimmen, wurden zwei Vollzellen, wie in Experiment 1 beschrieben, zum einen mit Referenzelektrolyt und zum anderen mit Elektrolyt 1 befüllt. Beide Vollzellen wurden bei 20°C geladen und wieder entladen. Die erreichte Entladekapazität wurde mit 100% bewertet. In Temperaturschritten von 10°C wurde die Temperatur der Vollzellen erniedrigt und jeweils wieder eine Lade-/ Entladezyklus durchgeführt. Die erhaltene Entladekapazität wurde in % der Entladekapazität bei 20°C beschrieben. Tabelle 5 zeigt die Ergebnisse.

Tabelle 5: Entladekapazitäten in Abhängigkeit der Temperatur

| Temperatur | Entladekapazität des Elektrolyts 1 | Entladekapazität des Referenzelektrolyt |
|---|---|---|
| 20°C | 100% | 100% |
| 10°C | 87% | 99% |
| 0°C | 72% | 46% |
| -10°C | 61% | 21% |
| -20°C | 31% | n/a |
| -30°C | 3% | n/a |
| -40°C | 0% | n/a |

Die Vollzelle mit dem Elektrolyt 1 zeigt ein sehr gutes Tieftemperaturverhalten. Bei -10°C werden noch 61% der Kapazität erreicht, bei - 20°C noch 31%. Selbst bei -30 °C kann noch ein kleiner Teil entladen werden. Im Gegensatz dazu zeigt die Vollzelle mit dem Referenzelektrolyten nur eine Entladefähigkeit bis -10°C. Dabei wird eine Kapazität von 21% erreicht.

## Patentansprüche

**1.** Auf $SO_2$-basierender Elektrolyt für eine wiederaufladbare Batteriezelle, enthaltend zumindest ein erstes Leitsalz, welches die Formel (I)

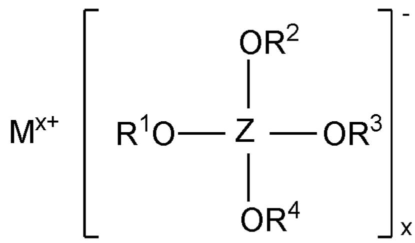

Formel (I)

aufweist, wobei

- M ein Metall ist, das ausgewählt ist aus der Gruppe, die gebildet wird von Alkalimetallen, Erdalkalimetallen, Metallen der Gruppe 12 des Periodensystems der Elemente und Aluminium;
- x eine ganze Zahl von 1 bis 3 ist;
- die Substituenten $R^1$, $R^2$, $R^3$ und $R^4$ unabhängig voneinander ausgewählt sind aus der Gruppe, die gebildet wird von $C_1$-$C_{10}$ Alkyl, $C_2$-$C_{10}$ Alkenyl, $C_2$-$C_{10}$ Alkinyl, C3-C10 Cycloalkyl, $C_6$-$C_{14}$ Aryl und $C_5$-$C_{14}$ Heteroaryl; und
- wobei Z Aluminium oder Bor ist.

**2.** Elektrolyt nach Anspruch 1, bei welchem die Substituenten $R^1$, $R^2$, $R^3$ und $R^4$ unabhängig voneinander ausgewählt sind aus der Gruppe, die gebildet wird von

- $C_1$-$C_6$ Alkyl; bevorzugt von $C_2$-$C_4$ Alkyl; besonders bevorzugt von den Alkylgruppen 2-Propyl, Methyl und Ethyl;
- $C_2$-$C_6$ Alkenyl; bevorzugt von $C_2$-$C_4$ Alkenyl; besonders bevorzugt von den Alkenylgruppen Ethenyl und Propenyl;
- $C_2$-$C_6$-Alkinyl; bevorzugt von $C_2$-$C_4$-Alkinyl;
- $C_3$-$C_6$ Cycloalkyl;
- Phenyl; und
- $C_5$-$C_7$ Heteroaryl.

**3.** Elektrolyt nach Anspruch 1 oder 2, bei welchem zumindest einer der Substituenten $R^1$, $R^2$, $R^3$ und $R^4$ durch mindestens ein Fluoratom und/oder durch mindestens eine chemische Gruppe substituiert ist, wobei die chemische Gruppe ausgewählt ist aus der Gruppe, die gebildet wird von $C_1$-$C_4$-Alkyl, $C_2$-$C_4$-Alkenyl, $C_2$-$C_4$-Alkinyl, Phenyl und Benzyl.

**4.** Elektrolyt nach einem der Ansprüche 1 bis 3, bei welchem zumindest einer der Substituenten $R^1$, $R^2$, $R^3$ und $R^4$ eine $CF_3$-Gruppe oder eine $OSO_2CF_3$-Gruppe ist.

**5.** Elektrolyt nach einem der Ansprüche 1 bis 4, bei welchem das erste Leitsalz ausgewählt ist aus der Gruppe, die gebildet wird von

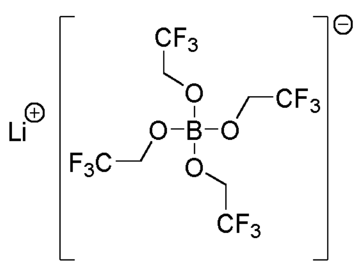

$Li[B(OCH_2CF_3)_4]$

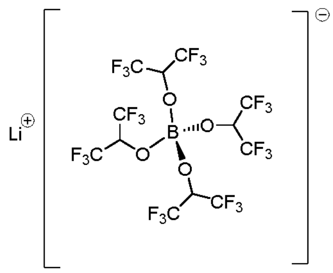

$Li[B(OCH(CF_3)_2)_4]$

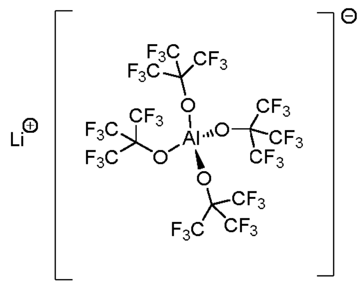

$Li[Al(OC(CF_3)_3)_4]$

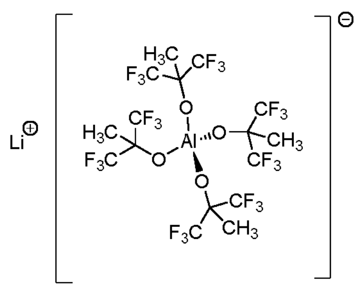

$Li[Al(OC(CH_3)(CF_3)_2)_4]$

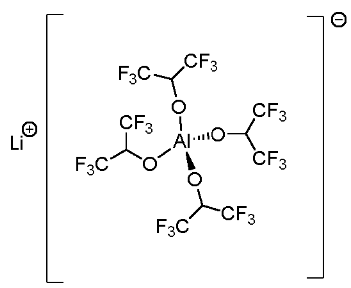

$Li[Al(OCH(CF_3)_2)_4]$.

**6.** Elektrolyt nach einem der Ansprüche 1 bis 5, welcher mindestens ein zweites, von dem ersten Leitsalz nach Formel (I) abweichendes Leitsalz enthält.

**7.** Elektrolyt nach Anspruch 6, bei welchem das zweite Leitsalz eine Alkalimetallverbindung, insbesondere eine Lithiumverbindung ist, die ausgewählt ist aus der Gruppe, die gebildet wird von einem Aluminat, einem Halogenid, einem Oxalat, einem Borat, einem Phosphat, einem Arsenat und einem Gallat.

**8.** Elektrolyt nach Anspruch 6 oder 7, bei welchem das zweite Leitsalz ein Lithiumtetrahalogenoaluminat, insbesondere Lithiumtetrachloroaluminat ist.

**9.** Elektrolyt nach einem der Ansprüche 1 bis 8, welcher mindestens ein Additiv enthält.

**10.** Elektrolyt nach Anspruch 9,

bei welchem das Additiv ausgewählt ist aus der Gruppe, die gebildet wird von Vinylencarbonat und seinen Derivaten, Vinylethylencarbonat und seinen Derivaten, Methylethylencarbonat und seinen Derivaten, Lithium(bisoxalato)borat, Lithiumdifluoro(oxalato)borat, Lithiumtetrafluoro(oxalato)phosphat, Lithiumoxalat, 2-Vinylpyridin, 4-Vinylpyridin, cyclische Exomethylencarbonate, Sultone, cyclische und acyclische Sulfonate, acyclische Sulfite, cyclische und acyclische Sulfinate, organische Ester, anorganischer Säuren, acyclische und cyclische Alkane, welche acyclischen und cyclischen Alkane einen Siedepunkt bei 1 bar von mindestens 36 ° C aufweisen, aromatische Verbindungen, halogenierte cyclische und acyclische Sulfonylimide, halogenierte cyclische und acyclische Phosphatester, halogenierte cyclische und acyclische Phosphine, halogenierte cyclische und acyclische Phosphite, halogenierte cyclische und acyclische Phosphazene, halogenierte cyclische und acyclische Silylamine, halogenierte cyclische und acyclische halogenierte Ester, halogenierte cyclische und acyclische Amide, halogenierte cyclische und acyclische Anhydride und halogenierte organische Heterocyclen.

**11.** Elektrolyt nach einem der Ansprüche 1 bis 10,
welcher die Zusammensetzung

(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes und
(iv) 0 bis 10 Gew.-% des Additivs,

bezogen auf das Gesamtgewicht der Elektrolytzusammensetzung aufweist.

**12.** Elektrolyt nach einem der Ansprüche 1 bis 11,
bei welchem die Stoffmengenkonzentration des ersten Leitsalzes im Bereich von 0,05 mol/l bis 10 mol/l, bevorzugt von 0,1 mol/l bis 6 mol/l und besonders bevorzugt von 0,2 mol/l bis 3,5 mol/l bezogen auf das Gesamtvolumen des Elektrolyten ist.

**13.** Elektrolyt nach einem der Ansprüche 1 bis 12,
bei welchem der Elektrolyt mindestens 0,1 Mol $SO_2$, bevorzugt mindestens 1 Mol $SO_2$, weiter bevorzugt mindestens 5 Mol $SO_2$, weiter bevorzugt mindestens 10 Mol $SO_2$ und besonders bevorzugt mindestens 20 Mol $SO_2$ je Mol Leitsalz enthält.

**14.** Wiederaufladbare Batteriezelle (2), enthaltend einen Elektrolyten nach zumindest einem der zuvor genannten Ansprüche, ein aktives Metall, zumindest eine positive Elektrode (4), zumindest eine negative Elektrode (5) und ein Gehäuse (1).

**15.** Wiederaufladbare Batteriezelle (2) nach Anspruch 14,
bei welcher das aktive Metall

- ein Alkalimetall, insbesondere Lithium oder Natrium;
- ein Erdalkalimetall, insbesondere Calcium;
- ein Metall der Gruppe 12 des Periodensystems, insbesondere Zink; oder
- Aluminium

ist.

**16.** Wiederaufladbare Batteriezelle (2) nach Anspruch 14 oder 15,
bei welcher die negative Elektrode (5) eine Insertionselektrode ist, die vorzugsweise Kohlenstoff als aktives Material, insbesondere in der Modifikation Graphit enthält.

**17.** Wiederaufladbare Batteriezelle (2) nach einem der Ansprüche 14 bis 16, bei welcher die positive Elektrode (4) als aktives Material zumindest eine Interkalationsverbindung enthält, die vorzugsweise die Zusammensetzung $Li_xM'_yM''_zO_a$ aufweist, worin

- M' mindestens ein Metall ist, das ausgewählt ist aus der Gruppe, die gebildet wird von den Elementen Ti, V, Cr, Mn, Fe, Co, Ni, Cu und Zn;
- M" mindestens ein Element ist, das ausgewählt ist aus der Gruppe, die gebildet wird von den Elementen der 2, 3, 4, 5, 6, 7, 8, 9, 10, 11, 12, 13, 14, 15 und 16 des Periodensystems der Elemente,

- x und y größer 0 sind,
- z größer oder gleich 0 ist und
- a größer 0 ist.

**18.** Wiederaufladbare Batteriezelle (2) nach Anspruch 17, bei welcher die Interkalationsverbindung die Zusammensetzung $Li_xM'_yM''_zO_a$ aufweist, in welcher M' Eisen und M" Phosphor sind und wobei vorzugsweise x, y und z gleich 1 und a gleich 4 ist.

**19.** Wiederaufladbare Batteriezelle (2) nach Anspruch 17 oder 18, bei welcher bei welcher die Interkalationsverbindung die Zusammensetzung $Li_xM'_yM''_zO_a$ aufweist, in welcher M' Mangan und M" Cobalt sind und wobei vorzugsweise x, y und z gleich 1 und a gleich 4 ist.

**20.** Wiederaufladbare Batteriezelle (2) nach Anspruch 17 oder 18, bei welcher bei welcher die Interkalationsverbindung die Zusammensetzung $Li_xM'_yM''_zO_a$ aufweist, in welcher M' Nickel und Mangan umfasst und M" Kobalt ist.

**21.** Wiederaufladbare Batteriezelle (2) nach einem der Ansprüche 14 bis 20, bei welcher die positive Elektrode (4) zumindest eine Metallverbindung enthält, die ausgewählt ist aus der Gruppe, die gebildet wird von einem Metalloxid, einem Metallhalogenid und einem Metallphosphat, wobei das Metall der Metallverbindung vorzugsweise ein Übergangsmetall der Ordnungszahlen 22 bis 28 des Periodensystems der Elemente, insbesondere Kobalt, Nickel, Mangan oder Eisen ist.

**22.** Wiederaufladbare Batteriezelle (2) nach einem der Ansprüche 14 bis 21, bei welcher die positive Elektrode (4) und/oder die negative Elektrode (5) ein Ableitelement (34, 35) aufweisen, das vorzugsweise

- entweder planar in Form eines Metallblechs oder einer Metallfolie oder
- dreidimensional in Form einer porösen Metallstruktur, insbesondere in Form eines Metallschaums (18)

ausgebildet ist.

**23.** Wiederaufladbare Batteriezelle (2) nach einem der Ansprüche 14 bis 22, bei welcher die positive Elektrode (4) und/oder die negative Elektrode (5) zumindest ein Bindemittel, vorzugsweise ein fluoriertes Bindemittel, insbesondere ein Polyvinylidenfluorid und/oder ein Terpolymer aus Tetrafluorethylen, Hexafluorpropylen und Vinylidenfluorid, oder
ein Bindemittel, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist, oder
ein Bindemittel, welches aus einem Polymer besteht, das auf monomeren Styrol- und Butadien-Struktureinheiten basiert, oder ein Bindemittel aus der Gruppe der Carboxymethylcellulosen enthält,
wobei das Bindemittel vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der positiven Elektrode vorliegt.

**24.** Wiederaufladbare Batteriezelle (2) nach einem der Ansprüche 14 bis 23, welche mehrere negative Elektroden (4) und mehrere positive Elektroden (5) umfasst, die alternierend gestapelt in dem Gehäuse (1) angeordnet sind, wobei die positiven Elektroden (4) und die negativen Elektroden (5) vorzugsweise jeweils durch Separatoren (11) voneinander elektrisch getrennt sind.

## Claims

**1.** $SO_2$-based electrolyte for a rechargeable battery cell comprising at least a first conducting salt of the formula (I),

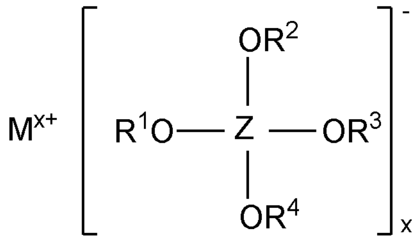

formula (I)

wherein

- M is a metal selected from the group consisting of alkali metals, alkaline earth metals, metals of group 12 of the periodic table of the elements and aluminum;
- x is an integer from 1 to 3;
- the substituents $R^1$, $R^2$, $R^3$ and $R^4$ are independently chosen from the group consisting of $C_1$-$C_{10}$ alkyl, $C_2$-$C_{10}$ alkenyl, $C_2$-$C_{10}$ alkynyl, $C_3$-$C_{10}$ cycloalkyl, $C_6$-$C_{14}$ aryl, and $C_5$-$C_{14}$ heteroaryl; and
- wherein Z is aluminum or boron.

**2.** Electrolyte according to claim 1,
wherein the substituents $R^1$, $R^2$, $R^3$ and $R^4$ are independently chosen from the group consisting of

- $C_1$-$C_6$ alkyl; preferably of $C_2$-$C_4$ alkyl; particularly preferred of the alkyl groups 2-propyl, methyl and ethyl;
- $C_2$-$C_6$ alkenyl; preferably of $C_2$-$C_4$ alkenyl; particularly preferred of the alkenyl groups ethenyl and propenyl;
- $C_2$-$C_6$ alkynyl; preferably of $C_2$-$C_4$ alkynyl;
- $C_3$-$C_6$ cycloalkyl;
- phenyl; and
- $C_5$-$C_7$ heteroaryl.

**3.** Electrolyte according to claim 1 or 2,
wherein at least one of the substituents $R^1$, $R^2$, $R^3$ and $R^4$ is substituted by at least one fluorine atom and/or by at least one chemical group, said chemical group being chosen from the group consisting of $C_1$-$C_4$ alkyl, $C_2$-$C_4$ alkenyl, $C_2$-$C_4$ alkynyl, phenyl and benzyl.

**4.** Electrolyte according to any of claims 1 to 3,
wherein at least one of the substituents $R^1$, $R^2$, $R^3$ and $R^4$ is a $CF_3$-group or a $OSO_2CF_3$-group.

**5.** Electrolyte according to any of claims 1 to 4,
wherein the first conducting salt is chosen from the group consisting of

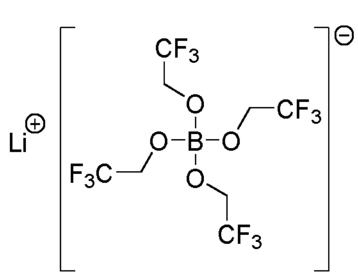

$Li[B(OCH_2CF_3)_4]$

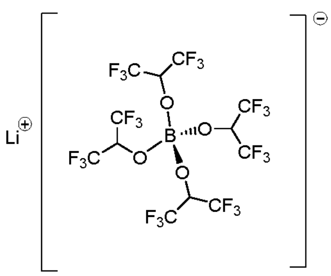

$Li[B(OCH(CF_3)_2)_4]$

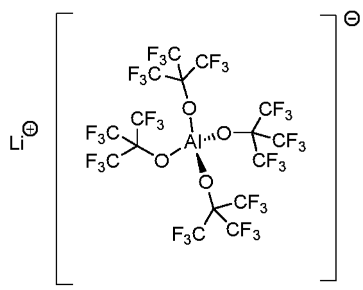

$Li[Al(OC(CF_3)_3)_4]$

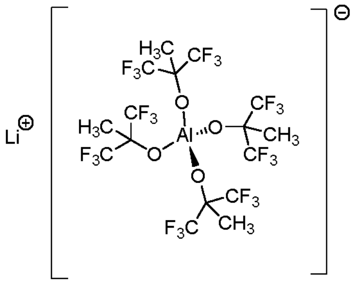

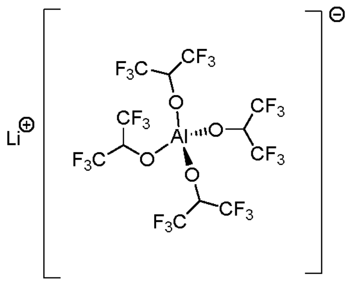

$Li[Al(OC(CH_3)(CF_3)_2)_4]$ $Li[Al(OCH(CF_3)_2)_4]$.

**6.** Electrolyte according to any of claims 1 to 5,
which contains at least one second conducting salt which differs from the first conducting salt according to formula (I).

**7.** Electrolyte according to claim 6,
wherein the second conducting salt is an alkali metal compound, in particular a lithium compound chosen from the group consisting of an aluminate, a halide, an oxalate, a borate, a phosphate, an arsenate and a gallate.

**8.** Electrolyte according to claim 6 or 7,
wherein the second conducting salt is a lithium tetrahalogenoaluminate, in particular lithium tetrachloroaluminate.

**9.** Electrolyte according to any of claims 1 to 8,
which contains at least one additive.

**10.** Electrolyte according to claim 9,
wherein the additive is chosen from the group consisting of vinylene carbonate and its derivatives, vinyl ethylene carbonate and its derivatives, methyl ethylene carbonate and its derivatives, lithium (bisoxalato)borate, lithium difluoro(oxalato)borate, lithium tetrafluoro(oxalato)phosphate, lithium oxalate, 2-vinylpyridine, 4-vinylpyridine, cyclic exomethylenecarbonates, sultones, cyclic and acyclic sulfonates, acyclic sulfites, cyclic and acyclic sulfinates, organic esters, inorganic acids, acyclic and cyclic alkanes, wherein said acyclic and cyclic alkanes have a boiling point at 1 bar of at least 36 °C, aromatic compounds, halogenated cyclic and acyclic sulfonylimides, halogenated cyclic and acyclic phosphate esters, halogenated cyclic and acyclic phosphines, halogenated cyclic and acyclic phosphites, halogenated cyclic and acyclic phosphazenes, halogenated cyclic and acyclic silylamines, halogenated cyclic and acyclic halogenated esters, halogenated cyclic and acyclic amides, halogenated cyclic and acyclic anhydrides and halogenated organic heterocycles.

**11.** Electrolyte according to any of claims 1 to 10,
comprising a composition of

(i) 5 to 99.4% by weight of sulphur dioxide,
(ii) 0.6 to 95% by weight of the first conducting salt,
(iii) 0 to 25% by weight of the second conducting salt; and
(iv) 0 to 10% by weight of the additive,

based on the total weight of the electrolyte composition.

**12.** Electrolyte according to any of claims 1 to 11,
wherein the molar concentration of the first conducting salt is in the range of 0.05 mol/l to 10 mol/l, preferably 0.1 mol/l to 6 mol/l and particularly preferred 0.2 mol/l to 3.5 mol/l based on to the total volume of the electrolyte.

**13.** Electrolyte according to any of claims 1 to 12,
wherein at least 0.1 mol $SO_2$, preferably at least 1 mol $SO_2$, more preferably at least 5 mol $SO_2$, more preferably at least 10 mol $SO_2$ and particularly preferred at least 20 mol $SO_2$ per mol of conducting salt.

**14.** Rechargeable battery cell (2) comprising an electrolyte according to at least one of the above claims, an active metal, at least one positive electrode (4), at least one negative electrode (5) and a housing (1).

**15.** Rechargeable battery cell (2) according to claim 14, wherein the active metal

- is an alkali metal, in particular lithium or sodium;
- an alkaline earth metal, in particular calcium;
- a metal of group 12 of the periodic table of the elements, in particular zinc; or
- aluminum.

**16.** Rechargeable battery cell (2) according to claim 14 or 15, wherein the negative electrode (5) is an insertion electrode, preferably containing carbon as an active material, in particular in the graphite modification.

**17.** Rechargeable battery cell (2) according to any of claims 14 to 16, wherein the positive electrode (4) contains as active material at least one intercalation compound, which preferably contains the composition $Li_xM'_yM''_zO_a$ wherein

- M' is at least one metal chosen from the group consisting of the elements Ti, V, Cr, Mn, Fe, Co, Ni, Cu and Zn;
- M" is at least one element chosen from the group formed by the elements of the groups 2, 3, 4, 5, 6, 7, 8, 9, 10, 11, 12, 13, 14, 15 and 16 of the periodic table of the elements,
- x and y are greater than 0,
- z is greater than or equal to 0 and
- a is greater than 0.

**18.** Rechargeable battery cell (2) according to claim 17, wherein the intercalation compound has the composition $Li_xM'_yM''_zO_a$, wherein M' is iron and M" is phosphorus and preferably x, y and z are equal to 1 and a is equal to 4.

**19.** Rechargeable battery cell (2) according to claim 17 or 18, wherein the intercalation compound has the composition $Li_xM'_yM''_zO_a$, wherein M' is manganese and M" is cobalt and preferably x, y and z are equal to 1 and a is equal to 4.

**20.** Rechargeable battery cell (2) according to claim 17 or 18, wherein the intercalation compound has the composition $Li_xM'_yM''_zO_a$, wherein M' comprises nickel and manganese and M" is cobalt.

**21.** Rechargeable battery cell (2) according to any of claims 14 to 20, wherein the positive electrode (4) comprises at least one metal compound chosen from the group consisting of a metal oxide, a metal halide and a metal phosphate, wherein the metal of the metal compound is preferably a transition metal with an atomic number of 22 to 28 of the periodic table of elements, in particular cobalt, nickel, manganese or iron.

**22.** Rechargeable battery cell (2) according to any of claims 14 to 21, wherein the positive electrode (4) and/or the negative electrode (5) feature a conducting element (34, 35), which is preferably

- either planar-shaped in form of a metal sheet or a metal foil, or
- three-dimensionally-shaped in the form of a porous metal structure, in particular in the form of a metal foam (18).

**23.** Rechargeable battery cell (2) according to any of claims 14 to 22, wherein the positive electrode (4) and/or the negative electrode (5) contain at least one binder, preferably a fluorinated binder, in particular a polyvinylidene fluoride and/or a terpolymer of tetrafluoroethylene, hexafluoropropylene and vinylidene fluoride, or
a binder consisting of a polymer composed of monomeric structural units of a conjugated carboxylic acid or of the alkali metal, alkaline earth metal or ammonium salt of said conjugated carboxylic acid or of a combination thereof, or a binder consisting of a polymer which is based on monomeric styrene and butadiene structural units, or a binder from the group of carboxymethylcelluloses, wherein the binder is preferably present in a concentration of at most 20% by weight, more preferably of at most 15% by weight, more preferably of at most 10% by weight, more preferably of at most 7% by weight, more preferably of at most 5% by weight and particularly preferred of at most 2% by weight

based on the total weight of the positive electrode.

**24.** Rechargeable battery cell (2) according to any of claims 14 to 23, comprising a plurality of negative electrodes (4) and a plurality of positive electrodes (5) arranged alternately stacked in the housing (1), wherein the positive electrodes (4) and the negative electrodes (5) are preferably electrically separated from each other by separators (11).

**Revendications**

**1.** Électrolyte à base de $SO_2$ pour une cellule de batterie rechargeable, contenant au moins un premier sel conducteur qui présente la formule (I)

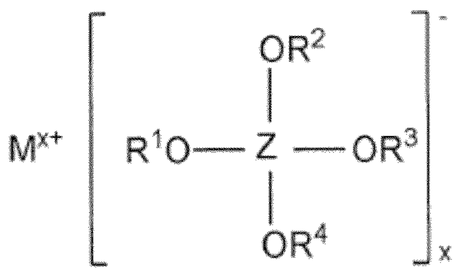

formule (I)

- M étant un métal qui est choisi dans le groupe qui est formé par des métaux alcalins, des métaux alcalino-terreux, des métaux du groupe 12 du système périodique des éléments et l'aluminium ;
- x étant un nombre entier de 1 à 3 ;
- les substituants $R^1$, $R^2$, $R^3$ et $R^4$ étant choisis indépendamment les uns des autres dans le groupe qui est formé par $C_1$-$C_{10}$ alkyle, $C_2$-$C_{10}$ alcényle, $C_2$-$C_{10}$ alcynyle, $C_3$-$C_{10}$ cycloalkyle, $C_6$-$C_{14}$ aryle et $C_5$-$C_{14}$ hétéroaryle ; et
- Z étant l'aluminium ou le bore.

**2.** Électrolyte selon la revendication 1, dans lequel les substituants $R^1$, $R^2$, $R^3$ et $R^4$ sont choisis indépendamment les uns des autres dans le groupe qui est formé par

- $C_1$-$C_6$ alkyle ; préférablement parmi $C_2$-$C_4$ alkyle ; particulièrement préférablement parmi les groupes alkyle 2-propyle, méthyle et éthyle ;
- $C_2$-$C_6$ alcényle ; préférablement parmi $C_2$-$C_4$ alcényle ; particulièrement préférablement parmi les groupes alcényle éthényle et propényle ;
- $C_2$-$C_6$-alcynyle ; préférablement parmi $C_2$-$C_4$-alcynyle ;
- $C_3$-$C_6$ cycloalkyle ;
- phényle ; et
- $C_5$-$C_7$ hétéroaryle.

**3.** Électrolyte selon la revendication 1 ou 2, dans lequel au moins l'un des substituants $R^1$, $R^2$, $R^3$ et $R^4$ est substitué par au moins un atome de fluor et/ou par au moins un groupe chimique, le groupe chimique étant choisi dans le groupe qui est formé par $C_1$-$C_4$-alkyle, $C_2$-$C_4$-alcényle, $C_2$-$C_4$-alcynyle, phényle et benzyle.

**4.** Électrolyte selon l'une quelconque des revendications 1 à 3, dans lequel au moins l'un des substituants $R^1$, $R^2$, $R^3$ et $R^4$ est un groupe $CF_3$ ou un groupe $OSO_2CF_3$.

**5.** Électrolyte selon l'une quelconque des revendications 1 à 4, dans lequel le premier sel conducteur est choisi dans le groupe qui est formé par

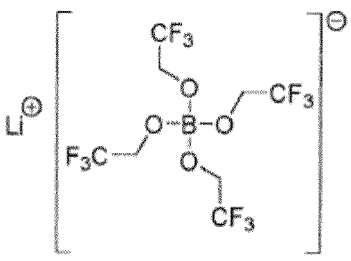

$Li[B(OCH_2CF_3)_4]$

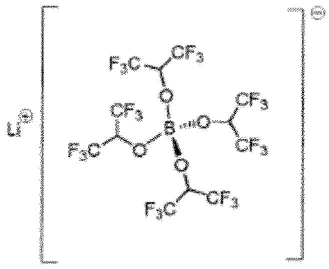

$Li[B(OCH(CF_3)_2)_4]$

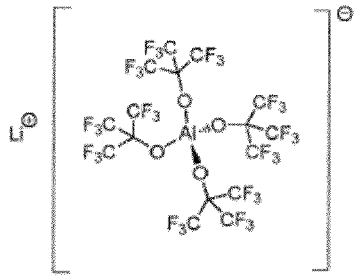

$Li[Al(OC(CF_3)_3)_4]$

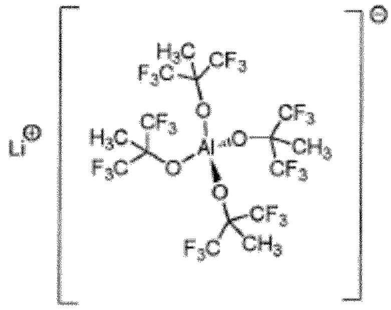

$Li[Al(OC(CH_3)(CF_3)_2)_4]$

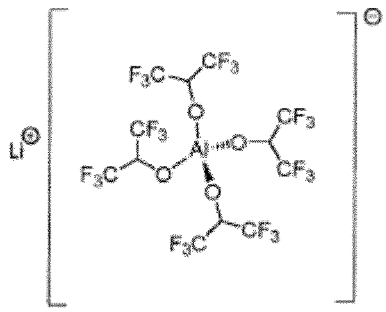

$Li[Al(OCH(CF_3)_2)_4]$.

**6.** Électrolyte selon l'une quelconque des revendications 1 à 5, qui contient au moins un deuxième sel conducteur différent du premier sel conducteur selon la formule (I).

**7.** Électrolyte selon la revendication 6, dans lequel le deuxième sel conducteur est un composé de métal alcalin, en particulier un composé du lithium, qui est choisi dans le groupe qui est formé par un aluminate, une halogénure, un oxalate, un borate, un phosphate, un arséniate et un gallate.

**8.** Électrolyte selon la revendication 6 ou 7, dans lequel le deuxième sel conducteur est un tétrahalogénoaluminate de lithium, en particulier le tétrachloroaluminate de lithium.

**9.** Électrolyte selon l'une quelconque des revendications 1 à 8, qui contient au moins un additif.

**10.** Électrolyte selon la revendication 9, dans lequel l'additif est choisi dans le groupe qui est formé par le carbonate de vinylène et ses dérivés, le carbonate de vinyléthylène et ses dérivés, le carbonate de méthyléthylène et ses dérivés, le (bisoxalato)borate de lithium, le difluoro(oxalato)borate de lithium, le tétrafluoro(oxalato)phosphate de lithium, l'oxalate de lithium, la 2-vinylpyridine, la 4-vinylpyridine, des carbonates d'exo-méthylène, des sultones, des sulfonates cycliques et acycliques, des sulfites acycliques, des sulfinates cycliques et acycliques, des esters organiques, des acides inorganiques, des alcanes acycliques et cycliques, lesquels alcanes acycliques et cycliques présentent un point d'ébullition à 1 bar d'au moins 36 °C, des composés aromatiques, des sulfonylimides halogénés cycliques et acycliques, des esters de phosphate halogénés cycliques et acycliques, des phosphines halogénées cycliques et acycliques, des phosphites halogénés cycliques et acycliques, des phosphazènes halogénés cycliques et acycliques, des silylamines halogénées cycliques et acycliques, des esters halogénés cycliques et acycliques, des amides halogénés cycliques et acycliques, des anhydrides halogénés cycliques et acycliques et des hétérocycles halogénés organiques.

**11.** Électrolyte selon l'une quelconque des revendications 1 à 10, qui présente la composition

(i) 5 à 99,4 % en poids de dioxyde de soufre,
(ii) 0,6 à 95 % en poids du premier sel conducteur,
(iii) 0 à 25 % en poids du deuxième sel conducteur et
(iv) 0 à 10 % poids de l'additif,

par rapport au poids total de la composition d'électrolyte.

**12.** Électrolyte selon l'une quelconque des revendications 1 à 11, dans lequel la concentration molaire du premier sel conducteur est dans la plage de 0,05 mole/l à 10 mole/l, préférablement de 0,1 mole/l à 6 mole/l et particulièrement préférablement de 0,2 mole/l à 3,5 mole/l par rapport au volume total de l'électrolyte.

**13.** Électrolyte selon l'une quelconque des revendications 1 à 12, dans lequel l'électrolyte contient au moins 0,1 mole de $SO_2$, préférablement au moins 1 mole de $SO_2$, plus préférablement au moins 5 moles de $SO_2$, plus préférablement au moins 10 moles de $SO_2$ et particulièrement préférablement au moins 20 moles de $SO_2$ par mole de sel conducteur.

**14.** Cellule de batterie rechargeable (2), contenant un électrolyte selon au moins l'une des revendications mentionnées précédemment, un métal actif, au moins une électrode positive (4), au moins une électrode négative (5) et un boîtier (1).

**15.** Cellule de batterie rechargeable (2) selon la revendication 14, dans laquelle le métal actif est

- un métal alcalin, en particulier le lithium ou le sodium ;
- un métal alcalino-terreux, en particulier le calcium ;
- un métal du groupe 12 du système périodique, en particulier le zinc ; ou
- l'aluminium.

**16.** Cellule de batterie rechargeable (2) selon la revendication 14 ou 15, dans laquelle l'électrode négative (5) est une électrode d'insertion qui contient de préférence du carbone en tant que matériau actif, en particulier dans la modification graphite.

**17.** Cellule de batterie rechargeable (2) selon l'une quelconque des revendications 14 à 16, dans laquelle l'électrode positive (4) contient, en tant que matériau actif, au moins un composé d'intercalation qui présente de préférence la composition $Li_xM'_yM''_zO_a$ , dans laquelle

- M' est au moins un métal qui est choisi dans le groupe qui est formé par les éléments Ti, V, Cr, Mn, Fe, Co, Ni, Cu et Zn ;
- M" est au moins un élément qui est choisi dans le groupe qui est formé par les éléments des groupes 2, 3, 4, 5, 6, 7, 8, 9, 10, 11, 12, 13, 14, 15 et 16 du système périodique des éléments,
- x et y sont supérieurs à 0,
- z est supérieur ou égal à 0 et
- a est supérieur à 0.

**18.** Cellule de batterie rechargeable (2) selon la revendication 17, dans laquelle le composé d'intercalation présente la composition $Li_xM'_yM''_zO_a$ , dans laquelle M' est le fer et M" est le phosphore et de préférence x, y et z étant égaux à 1 et a étant égal à 4.

**19.** Cellule de batterie rechargeable (2) selon la revendication 17 ou 18, dans laquelle le composé d'intercalation présente la composition $Li_xM'_yM''_zO_a$ , dans laquelle M' est le manganèse et M" est le cobalt et de préférence x, y et z étant égaux à 1 et a étant égal à 4.

**20.** Cellule de batterie rechargeable (2) selon la revendication 17 ou 18, dans laquelle le composé d'intercalation présente la composition $Li_xM'_yM''_zO_a$ , dans laquelle M' comprend le nickel et le manganèse et M" est le cobalt.

**21.** Cellule de batterie rechargeable (2) selon l'une quelconque des revendications 14 à 20, dans laquelle l'électrode positive (4) contient au moins un composé métallique qui est choisi dans le groupe qui est formé par un oxyde métallique, un halogénure métallique et un phosphate métallique, le métal du composé métallique étant de préférence un métal de transition des numéros atomiques 22 à 28 du système périodique des éléments, en particulier le cobalt, le nickel, le manganèse ou le fer.

**22.** Cellule de batterie rechargeable (2) selon l'une quelconque des revendications 14 à 21, dans laquelle l'électrode positive (4) et/ou l'électrode négative (5) présentent un élément de dérivation (34, 35), qui est de préférence réalisé

- soit de manière planaire sous forme d'une tôle métallique ou d'une feuille métallique, soit
- de manière tridimensionnelle sous forme d'une structure métallique poreuse, en particulier sous forme d'une mousse métallique (18).

**23.** Cellule de batterie rechargeable (2) selon l'une quelconque des revendications 14 à 22, dans laquelle l'électrode positive (4) et/ou l'électrode négative (5) contiennent au moins un liant, de préférence un liant fluoré, en particulier un poly(fluorure de vinylidène) et/ou un terpolymère de tétrafluoroéthylène, d'hexafluoropropylène et de fluorure de vinylidène, ou un liant qui est constitué d'un polymère qui est construit à partir de motifs structuraux monomériques d'un acide carboxylique conjugué ou à partir du sel d'alcalin, d'alcalino-terreux ou d'ammonium de cet acide carboxylique conjugué ou à partir d'une combinaison de ceux-ci, ou un liant qui est constitué d'un polymère qui est à base de motifs structuraux monomériques de type styrène et butadiène, ou un liant du groupe des carboxyméthylcelluloses, le liant étant présent de préférence en une concentration d'au plus 20 % en poids, plus préférablement d'au plus 15 % en poids, plus préférablement d'au plus 10 % en poids, plus préférablement d'au plus 7 % en poids, plus préférablement d'au plus 5 % en poids et particulièrement préférablement d'au plus 2 % en poids par rapport au poids total de l'électrode positive.

**24.** Cellule de batterie rechargeable (2) selon l'une quelconque des revendications 14 à 23, qui comprend plusieurs électrodes négatives (4) et plusieurs électrodes positives (5) qui sont disposées dans le boîtier (1), empilées de manière alternée, les électrodes positives (4) et les électrodes négatives (5) étant de préférence séparées électriquement l'une de l'autre à chaque fois par des séparateurs (11).

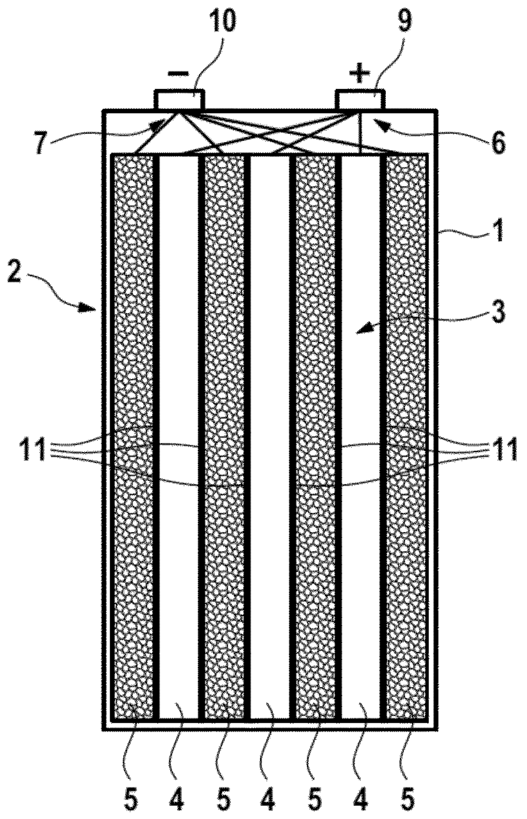


Fig. 1

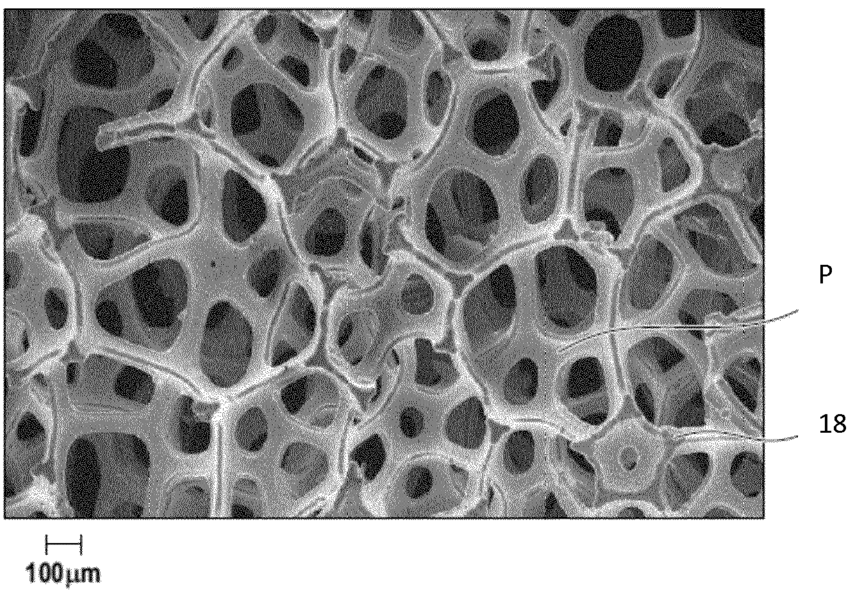


Fig. 2

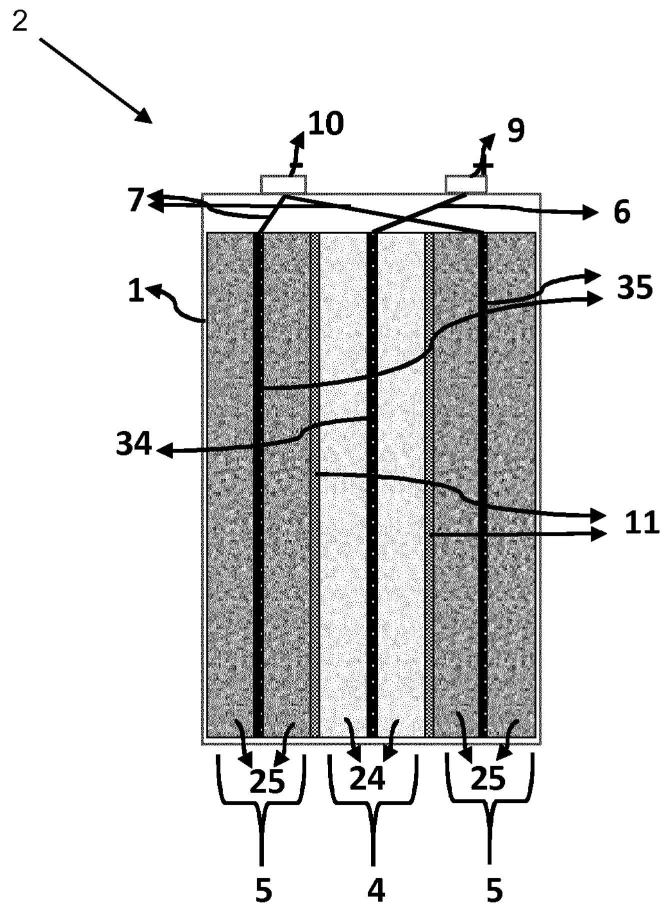


Fig. 3

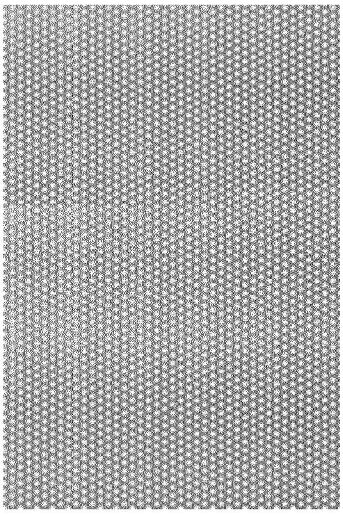

Fig. 4

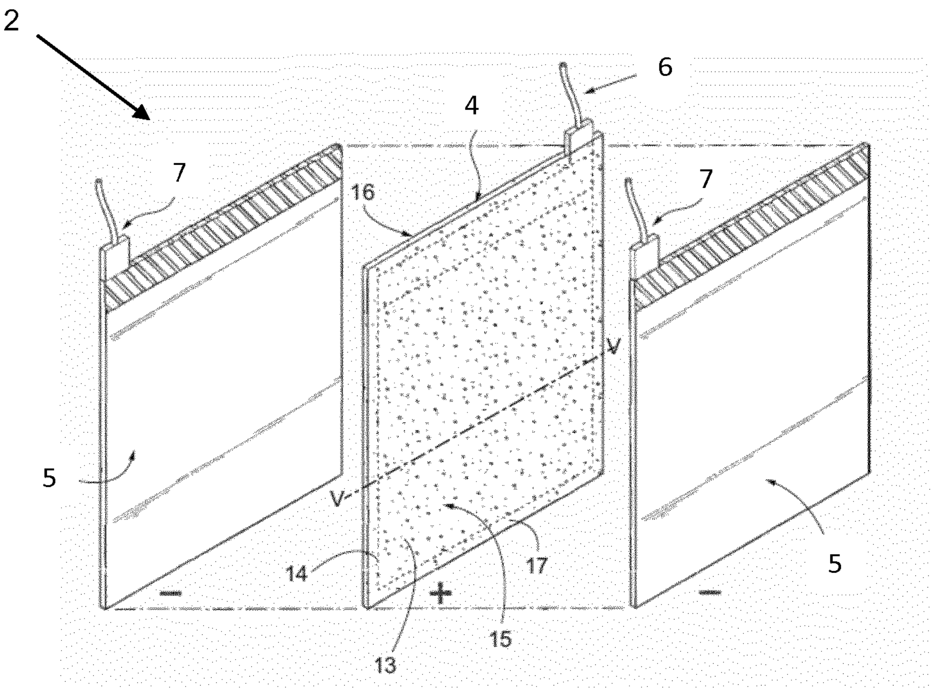


Fig. 5

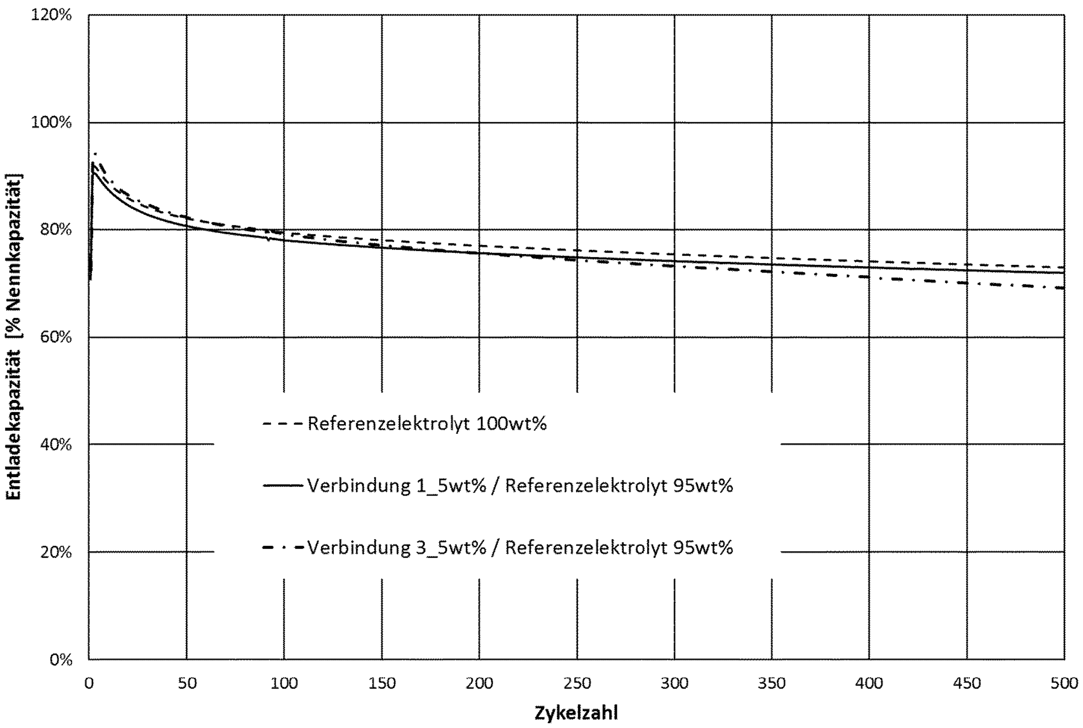
120%
100%
80%
60%
40%
20%
0%
Entladekapazität [% Nennkapazität]
0
50
100
150
200
250
300
350
400
450
500
Zykelzahl
Referenzelektrolyt 100wt%
Verbindung 1_5wt% / Referenzelektrolyt 95wt%
Verbindung 3_5wt% / Referenzelektrolyt 95wt%

**Fig. 6**

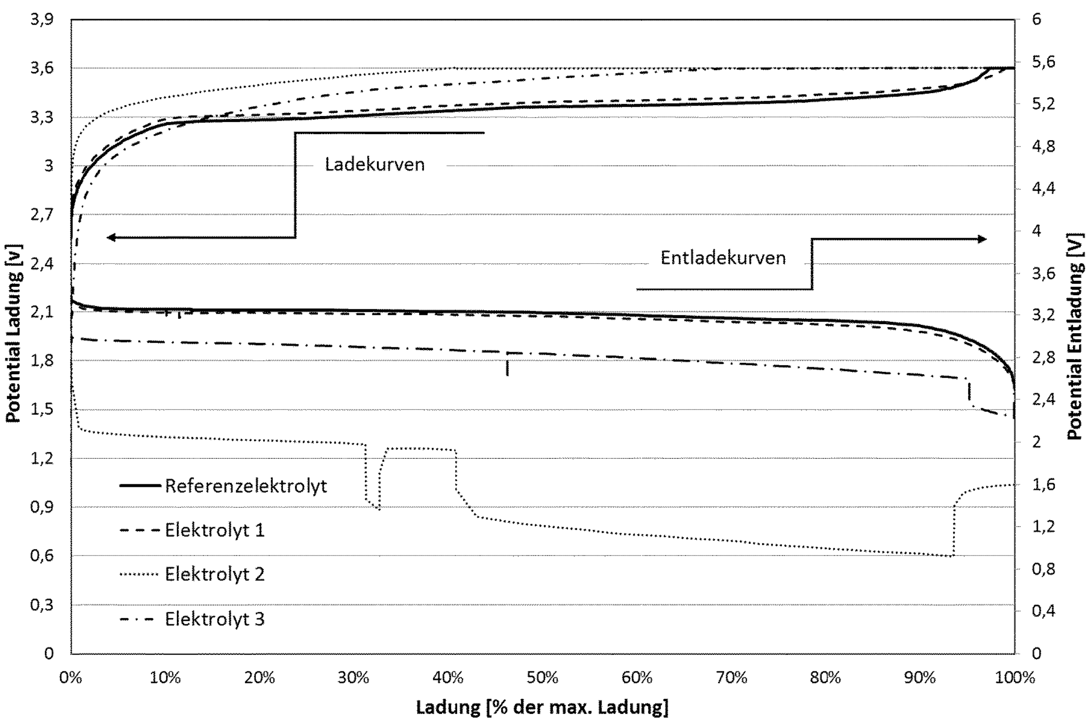
3,9
3,6
3,3
3
2,7
2,4
2,1
1,8
1,5
1,2
0,9
0,6
0,3
0
Potential Ladung [v]
6
5,6
5,2
4,8
4,4
4
3,6
3,2
2,8
2,4
2
1,6
1,2
0,8
0,4
0
Potential Entladung [V]
Ladekurven
Entladekurven
Referenzelektrolyt
Elektrolyt 1
Elektrolyt 2
Elektrolyt 3
0%
10%
20%
30%
40%
50%
60%
70%
80%
90%
100%
Ladung [% der max. Ladung]

**Fig. 7**

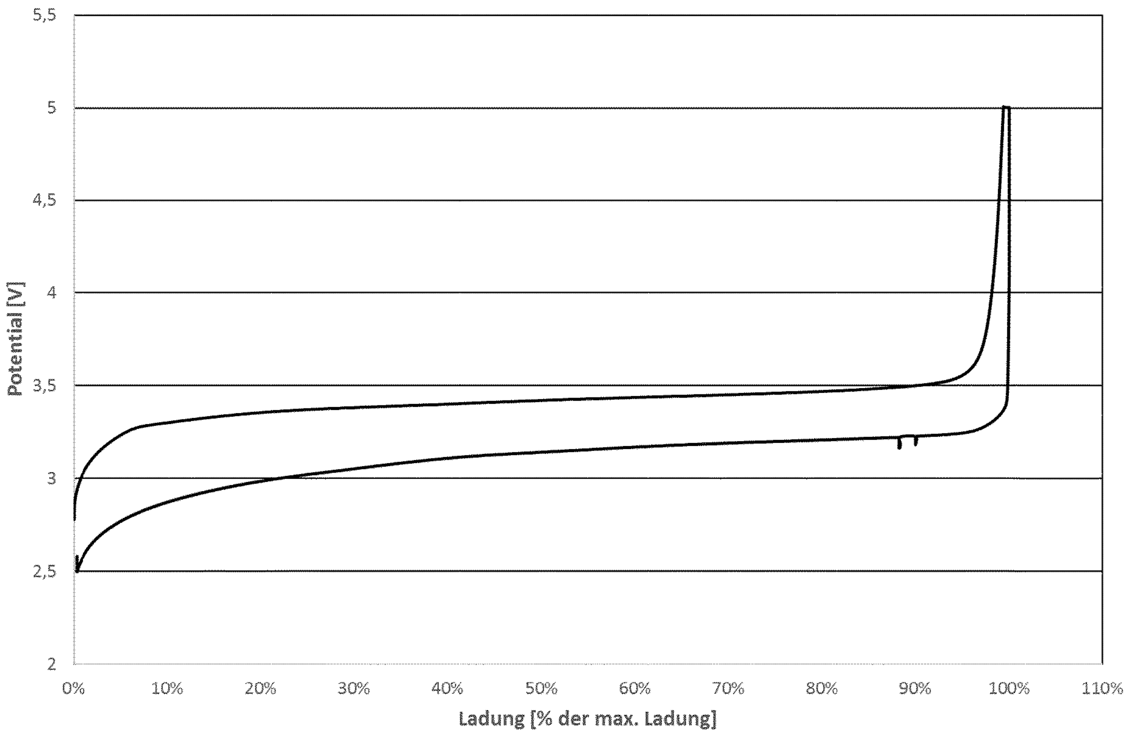
5,5
5
4,5
4
3,5
3
2,5
2
Potential [V]
0%
10%
20%
30%
40%
50%
60%
70%
80%
90%
100%
110%
Ladung [% der max. Ladung]

Fig. 8

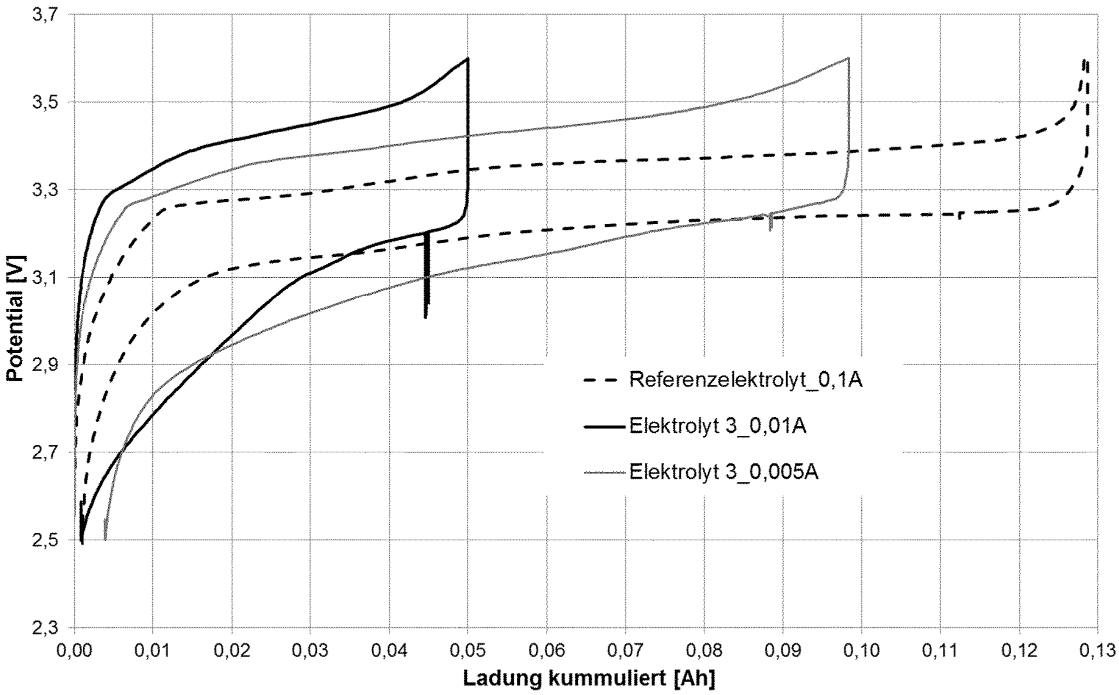
3,7
3,5
3,3
3,1
2,9
2,7
2,5
2,3
Potential [V]
0,00
0,01
0,02
0,03
0,04
0,05
0,06
0,07
0,08
0,09
0,10
0,11
0,12
0,13
Ladung kummuliert [Ah]
Referenzelektrolyt_0,1A
Elektrolyt 3_0,01A
Elektrolyt 3_0,005A

Fig. 9

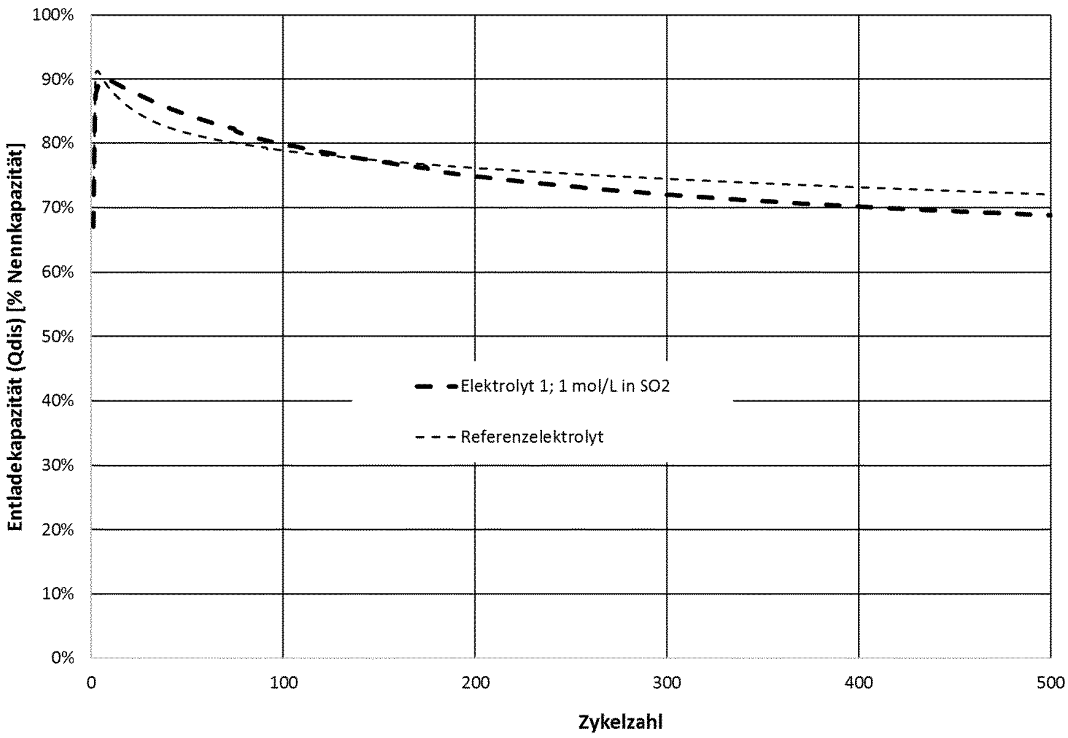
100%
90%
80%
70%
60%
50%
40%
30%
20%
10%
0%
Entladekapazität (Qdis) [% Nennkapazität]
0
100
200
300
400
500
Zykelzahl
Elektrolyt 1; 1 mol/L in SO2
Referenzelektrolyt

Fig. 10

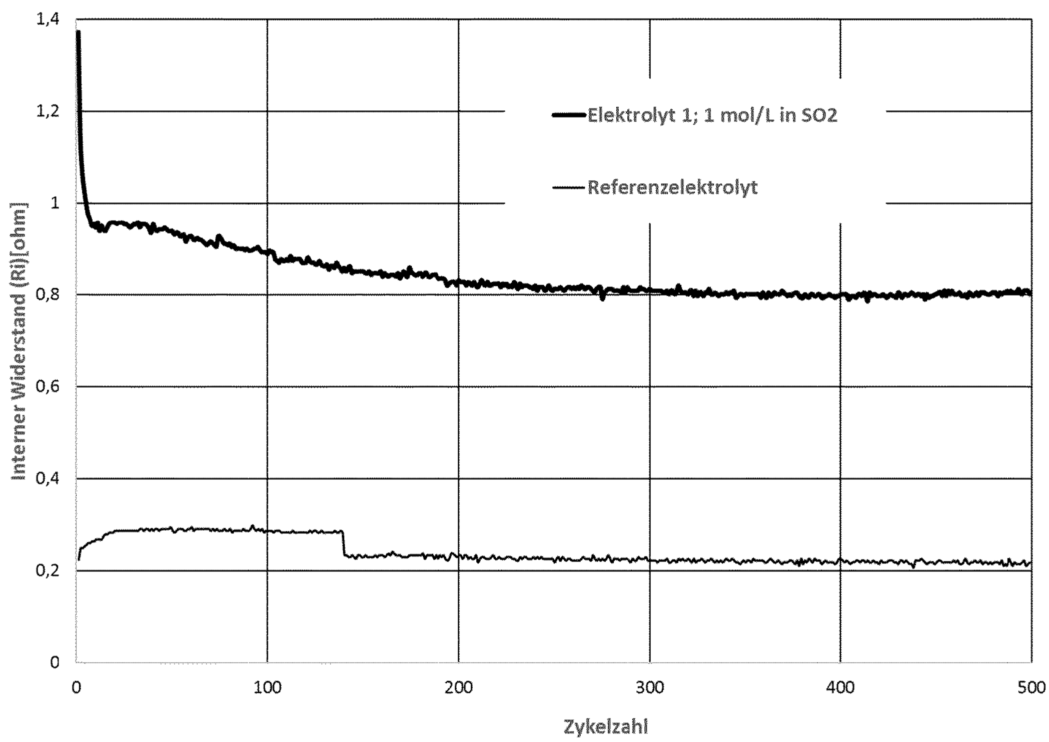
1,4
1,2
1
0,8
0,6
0,4
0,2
0
Interner Widerstand (Ri)[ohm]
0
100
200
300
400
500
Zykelzahl
Elektrolyt 1; 1 mol/L in SO2
Referenzelektrolyt

Fig. 11

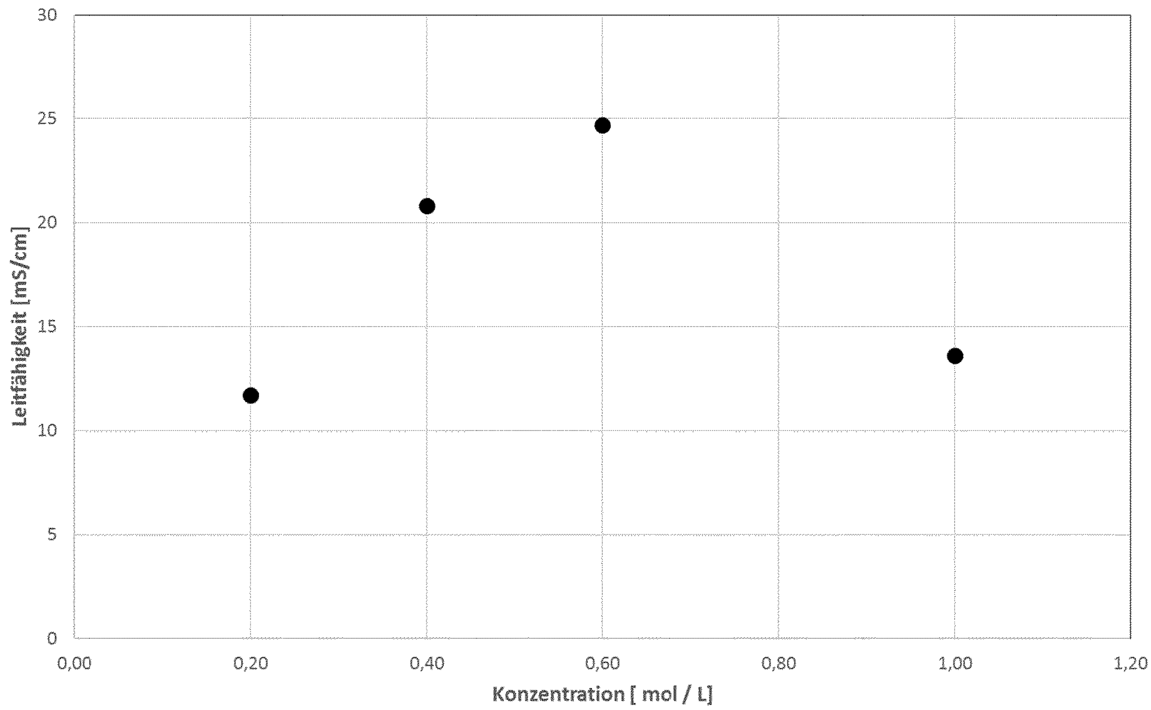

30
25
20
15
10
5
0
Leitfähigkeit [mS/cm]
0,00
0,20
0,40
0,60
0,80
1,00
1,20
Konzentration [ mol / L]


Fig. 12

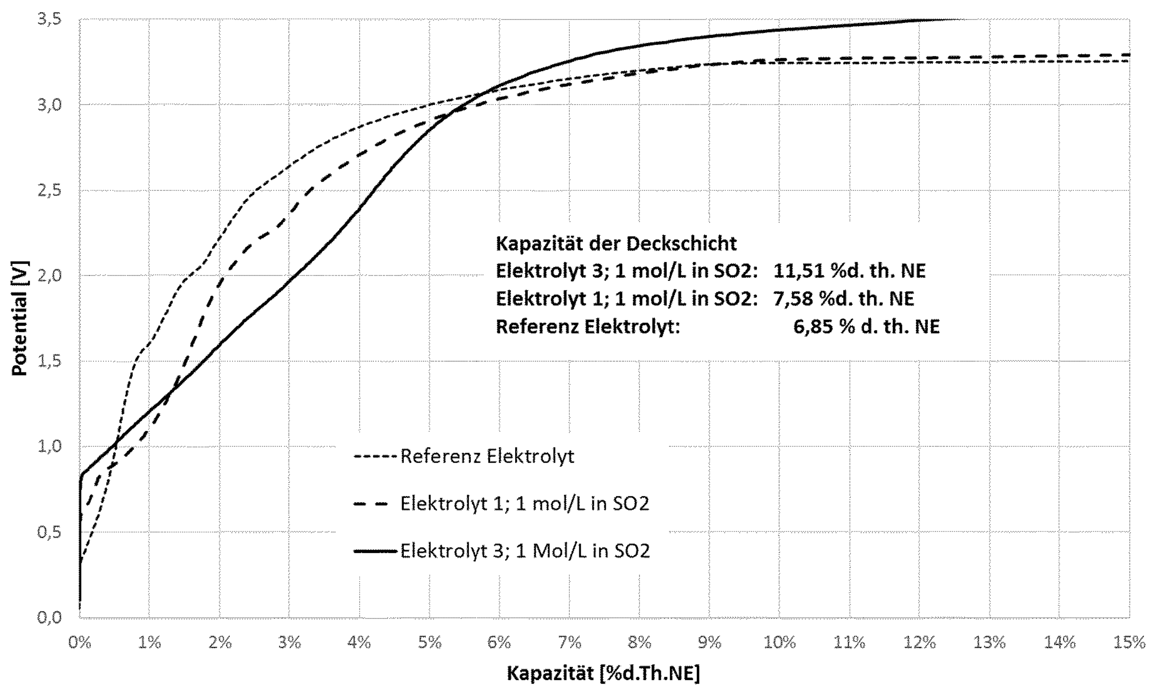

3,5
3,0
2,5
2,0
1,5
1,0
0,5
0,0
Potential [V]
Kapazität der Deckschicht
Elektrolyt 3; 1 mol/L in SO2: 11,51 %d. th. NE
Elektrolyt 1; 1 mol/L in SO2: 7,58 %d. th. NE
Referenz Elektrolyt: 6,85 % d. th. NE
Referenz Elektrolyt
Elektrolyt 1; 1 mol/L in SO2
Elektrolyt 3; 1 Mol/L in SO2
0%
1%
2%
3%
4%
5%
6%
7%
8%
9%
10%
11%
12%
13%
14%
15%
Kapazität [%d.Th.NE]


Fig. 13

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 4306858 B
- JP 2001143750 A
- US 4891281 A
- EP 1201004 B1
- EP 2534719 B1
- WO 2017178543 A1
- EP 2954588 B1


### In der Beschreibung aufgeführte Nicht-Patentliteratur


- **I. KROSSING.** *Chem. Eur. J.,* 2001, vol. 7, 490
- **S. M.IVANOVA et al.** *Chem. Eur. J.,* 2001, vol. 7, 503
- **TSUJIOKA et al.** *J. Electrochem. Soc.,* 2004, vol. 151, A1418